(19) Europäisches Patentamt
European Patent Office
Office européen des brevets

(11) EP 2 822 193 B1

(12) **EUROPEAN PATENT SPECIFICATION**

(45) Date of publication and mention
of the grant of the patent:
**29.06.2016 Bulletin 2016/26**

(51) Int Cl.:
**H04B 7/08** *(2006.01)* **H04B 7/10** *(2006.01)*

(21) Application number: **14175239.4**

(22) Date of filing: **01.07.2014**

(54) **Method, apparatus and system for reconstructing three signals transmitted on a MIMO radio link having three transmission antennas for each polarization**

Verfahren, Vorrichtung und System zur Rekonstruktion von drei Signalen, die auf einer MIMO-Funkverbindung mit drei Übertragungsantennen für jede Polarisierung übertragen werden

Procédé, appareil et système de reconstruction de trois signaux transmis sur une liaison radio MIMO ayant trois antennes de transmission pour chaque polarisation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2013 IT MI20131108**

(43) Date of publication of application:
**07.01.2015 Bulletin 2015/02**

(73) Proprietor: **SIAE Microelettronica S.p.A.**
**20093 Cologno Monzese (MI) (IT)**

(72) Inventors:
• **Rossi, Leonardo**
**20093 COLOGNO MONZESE (MI) (IT)**
• **Salatin, Matteo**
**20093 COLOGNO MONZESE (MI) (IT)**

(74) Representative: **Raimondi, Margherita**
**Dott. Ing. Prof. Alfredo Raimondi S.r.l.,**
**Piazzale le Cadorna, 15**
**20123 Milano (IT)**

(56) References cited:
**WO-A1-2007/132260 WO-A2-02/15456**
**US-A1- 2009 296 846**

## Description

The present invention relates to a method and apparatus for reconstructing signals transmitted in modulation on a single short-range radio link channel comprising multiple antennas and multiple channel inputs/outputs (MIMO).

It is known that in the technical sector of telecommunications there is the need to provide transmission systems with an increasingly greater capacity for the same available bandwidth. These systems are in particular increasingly required for example in an urban environment and over short distances in order to provide users with high speed wireless Internet connections and data services.

In addition, in order to serve the users, a network interconnecting the base stations must also be installed; this network is normally provided by means of radio relay connections which are also over a short distance (generally less than 5 km) between two fixed points. These latter sections, which are also referred to as being "short range" (or "urban"), have the characteristic of offering a channel with transmission medium which may be regarded as being "time invariable": namely such that it may be considered to be uniform and constant over time, since the phenomena which affect signal propagation (mainly associated with the multiple paths due to air stratification and therefore to atmospheric conditions) do not manage to produce variations such as to alter the predefined geometry of propagation on the radio link.

A known technique for increasing the information transmitted on such radio links involves using, for propagation of the signals, electromagnetic waves which can be distinguished from each other by mode and/or by transmission polarization (which may be, for example, horizontal/vertical, circular clockwise/anti-clockwise, or the like) on multiple antennas which transmit isofrequential signals which are intrinsically such as to allow a certain degree of discrimination for recognition thereof during reception (e.g. cross-polar transmission).

US 2009/296 486 A1 and WO 02/15456 A2 disclose a technique for providing MIMO radio links using a radio link configuration with N transmitting antennas and corresponding N receiving antennas.

The signal transmitted by each of the N transmitting antennas is received by each of the N receiving antennas, with a relative phase shift introduced by the path differences between the transmitting antenna and the various receiving antennas.

In particular each receiving antenna receives both the useful signal transmitted by its corresponding transmitting antenna and all the other N-1 signals transmitted by the remaining antennas; the received signals being superimposed on each other and phase-shifted with respect to each other. A radio link as described in the preamble of claim 1 or 10 falls within this general radio link configuration.

US'486 and WO'456 teach construction of a channel matrix NxN and reconstruction during reception of each transmitted signal by means of inversion of the channel matrix, using a method which envisages the following steps:

- inversion of the channel matrix NxN, thus obtaining an inverse matrix NxN;
- reconstruction of each signal transmitted by means of linear cross-cancellation operations using all the N signals received by the N antennas, which are rotated and/or compressed using suitable coefficients (determined on the basis of the inverse matrix calculated) and added together by means of linear operations.

This method has significant drawbacks in that:

- for reconstruction of each of the N signals it is necessary to use all the N signals which are received on the N antennas and which are suitably rotated and added together by means of linear operations and depending on the channel matrix characteristic of the radio link; noise introduced into the reconstructed signal by the corresponding reception/demodulation modules; this means that the reconstruction of each signal is affected by the noise of all the N receivers/demodulators of the radio link; the system is therefore highly unreliable;
- the implementation of these solutions is very complex and not practical.

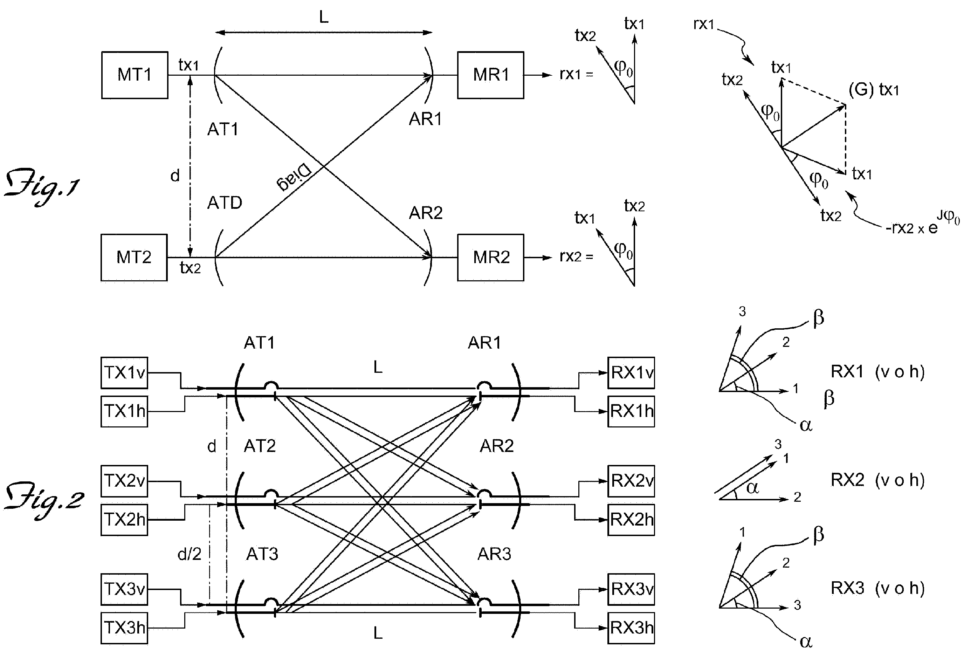

A further known technique for providing short-range radio links with an increased transmission capacity, which exploits the time invariance of the transmission means characterizing these short distances, uses an antenna configuration according to the diagram shown in the attached Figure 1 comprising two transmitting antennas AT1 and AT2 which are positioned at a distance "d" from each other and which transmit with the same polarization (co-polar transmission) a respective signal tx1,tx2 both using the same radio link, on the same carrier frequency (generally within the microwave bands) and towards two receiving antennas, AR1, AR2, situated at a distance L (possibly a few kilometres, but normally less than about 20 km and in any case less than the distance at which, at the transmission frequency, the transmission means can no longer be regarded as being "time invariable") from the respective transmission antennas AT1,AT2 and at a distance from each other typically, but not necessarily, again equal to "d". In such a case the signals received by the single antennas are defined as being in total interference, namely composite signals which can no longer be intrinsically discriminated during reception into the useful component and the interfering component, but require appropriate recognition and separation techniques.

The signals transmitted tx1,tx2 are generated by a respective, conventional, functional modulator/ transmitter unit MT1, MT2, which receives at its input a respective baseband source signal D1,D2. With reference to the focal points of each antenna, the two pairs of transmitting/receiving antennas must be arranged so that the relative distances between each transmitting antenna AT1;AT2 and the other receiving antenna AR2;AR1 (referred to below also as "interfering path") are identical to each other; in the case of limited differences compensation techniques are known to exist.

With this configuration of the radio link a relative interference between the transmitted signals occurs during reception such that each of the receiving antennas AR1,AR2 receives a corresponding signal rx1;rx2 respectively containing:

- the useful signal tx1;tx2 transmitted by the associated antenna At1;AT2 and
- the interfering signal tx2;tx1 transmitted by the other antenna AT2;AT1 and received with the same intensity (total interference conditions) and a phase shift $\varphi_0$ introduced by the difference in length between the useful path (AT1-AR1; AT2-AR2) and that with an interfering action ("interfering path" AT1-AR2; AT2-AR1) travelled along by each transmitted signal (tx1;tx2) at the frequency of the carrier.

With this configuration it is possible, owing to the fixed geometry of the path covered and provided that the relative phase shift $\varphi_0$ introduced is greater than 10°, or in any case greater than the value adopted as the deterioration threshold of the signal received, to implement methods for eliminating the interfering component of the signal received on each antenna by imparting, depending on the predefined geometry, suitable phase shifts to the signals (rx1,rx2) received by the different antennas and adding or subtracting suitably the same to/from each other so as to obtain only the useful signals.

A particular example of the transmission/reception techniques described above is known from EP 2,282,419 in the name of the same present Applicant, which describes a particular application of reuse of the channel which uses a particularly advantageous radio link geometry defined by the relation [("interfering path"-"useful path")= λ/4] in order to obtain a method for eliminating the interfering components which is particularly fast and low-cost.

Although fulfilling their function these known techniques are however applicable only to radio links which have a maximum of two transmitting antennas for each transmission polarization.

The technical problem which is posed therefore is that of providing a solution to the aforementioned defects of the prior art.

In particular the technical problem which is posed is that of providing a microwave or radiofrequency telecommunications method and system suitable for allowing in a particularly simple and low-cost manner a further increase, compared to he prior art, of the data transmission capacity on radio links of the short-range MIMO type, on which multiple, isofrequential and co-polar modulated signals are transmitted, allowing during reception separation of the useful components from the interfering components of the signals received by multiple receiving antennas of the said radio links.

It is required, moreover, that this method and system should allow a further increase in the transmission capacity of short-range MIMO radio links comprising two transmitting/receiving antennas for polarization, by introducing improvements which allow an increase in the capacity and/or reliability of the transmission channel, without varying the positioning of the pre-existing antennas.

It is also desirable that this increase in capacity should not adversely affect the reliability of the connection.

These results are achieved according to the present invention by a method for reconstructing signals according to the characteristic features of Claim 1, by a corresponding apparatus according to the characteristic features of Claim 11 and by a telecommunications system according to the characteristic features of Claim 17.

Further details may be obtained from the following description of non-limiting examples of embodiment of the method, the apparatus and the system according to the present invention provided with reference to the accompanying drawings, in which:

Figure 1: shows the diagram of a configuration for a MIMO radio link with two transmitting/receiving antennas for polarization according to the prior art;

Figure 2: shows the diagram of a first embodiment of a MIMO telecommunications system comprising three transmitting/receiving antennas for polarization according to the present invention;

Figure 3: shows the block diagram of a first embodiment of the receiver side of a MIMO system with three antennas according to the invention with the detail of an example of embodiment of the reconstruction apparatus according to the invention;

Figure 4: shows the block diagram of a second embodiment of the receiver side of a MIMO system with three antennas according to the invention with the detail of a second example of embodiment of the reconstruction apparatus according to the invention.

A non-limiting and preferred example of a telecommunications system according to the present invention comprises a radio link with the structure shown in Fig. 2, which comprises three pairs of transmitting/receiving antennas AT1-AR1;AT2-AR2;AT3-AR3 for each transmission polarization; the three pairs of transmitting and receiving antennas are arranged so that:

a) the distance L between each transmitting antenna AT1,AT2,AT3 and the respective receiving antenna AR1,AR2,AR3 is equal to the others and such that, at the transmission frequency, the phenomena which affect the propagation of the signals do not produce variations such as to alter the predefined geometry of the radio link propagation.

b) the distance d/2 between the first transmitting antenna AT1 and the second transmitting antenna AT2 is equal to the distance between the said second transmitting antenna AT2 and the third transmitting antenna AT3; and

c) the distance d between the first transmitting antenna AT1 and the third transmitting antenna AT3 is equal to twice said distance d/2 between the first transmitting antenna AT1 and the second transmitting antenna AT2 and between the second transmitting antenna AT2 and the third transmitting antenna AT3.

This preferred configuration is advantageous because it allows assembly of the antennas on the transmitter and/or receiver side on a same support post, simplifying installation.

This configuration may however also be excluded, for situations in which an installation with aligned antennas is not possible.

More generally, preferred radio link configurations comprise all those cases where the antennas are arranged so that the difference between the path AT1-AR2 between the first transmitting antenna and the second receiving antenna and the path AT2-AR2 between the second transmitting antenna and the corresponding receiving antenna is equal to the difference between the path AT3-AR2 between the third transmitting antenna and the second receiving antenna and said path AT2-AR2.

For the sake of simplicity an example of embodiment is described where there is a single transmission polarization and therefore a single set of three transmitting and receiving antennas; the transmission power will be moreover assumed to be the same for the three transmitting antennas AT1,AT2,AT3, although the invention is not limited in this respect. In addition, with regard to the installation of antennas it is known that, in the case of limited differences compared to the ideal configuration, there exist techniques for compensating said differences.

Each transmitting antenna AT1,AT2,AT3 transmits a respective signal tx1,tx2,tx3 generated by a respective conventional modulator/transmitter unit MT1,MT2,MT3 which receives at its input a respective baseband source data signal D1,D2,D3; in the example shown it is assumed, for easier description, that the values assumed by tx1,tx2,tx3 at the appropriate symbol instants may be precisely superimposed on the corresponding information symbols of the source signals D1,D2,D3 and that the transmitted signals tx1,tx2,tx3 therefore do not contain additional noise components compared to the source signals D1,D2,D3.

The signal tx1 transmitted by the first antenna AT1:

- propagates towards the first antenna AR1 along its primary path of length L and is received by the first receiving antenna AR1;
- propagates towards the second antenna AR2 along the interfering path AT1-AR2 and is received by the second receiving antenna AR2 with a first relative phase shift (delay) $\alpha$;
- propagates towards the third receiving antenna AR3 along the interfering path AT1-AR3 and is received by the third receiving antenna AR3 having accumulated a delay with respect to the propagation along the primary path corresponding to a second relative phase-shift $\beta$.

The signal tx2 transmitted by the second antenna AT2:

- propagates towards the second antenna AR2 along its primary path of length L and is received by the second antenna AR2;
- propagates towards the first receiving antenna AR1 along the interfering path AT2-AR1 and is received by the same with a relative phase shift equal to the first phase shift $\alpha$;
- propagates towards the third receiving antenna AR3 along the interfering path AT2-AR3 and is received by the same with a relative phase shift equal to the first phase shift $\alpha$.

In a similar manner to that illustrated for the signal tx1 illustrated by the first antenna AT1, the signal tx3 transmitted by the third transmitting antenna AT3:

- propagates towards the third receiving antenna AR3 along its primary path of length L and is received by the third receiving antenna AR3;
- propagates towards the second antenna AR2 along the interfering path AT3-AR2 and is received by the second receiving antenna AR2 with a relative phase shift equal to the first relative phase shift $\alpha$;
- propagates towards the first receiving antenna AR1 along the interfering path AT3-AR1 and is received by the first receiving antenna AR1 with a relative phase shift equal to the second phase shift $\beta$.

Said first phase shift $\alpha$ and second phase shift $\beta$ between the useful signals and the interfering signal are dependent on the predefined geometry of the radio link, the second phase shift $\beta$ being always greater (in radians) than the first phase shift $\alpha$. In general, the method and the apparatus according to the invention are applicable to telecommunication systems comprising a short-range MIMO radio link with three pairs of transmitting/receiving antennas AT1-AR1;AT2-AR2;AT3-AR3 for each transmission polarization, wherein:

- each transmitting antenna AT1,AT2,AT3 transmits a respective one of the three modulated signals tx1,tx2,tx3; and wherein

each of said receiving antennas AR1,AR2,AR3 is able to receive a respective high-frequency signal rx1,rx2,rx3 consisting of a primary component, corresponding to the signal transmitted by the respective transmitting antenna, and an interfering component, consisting of a combination of the signals transmitted by the other two transmitting antennas;

and with a configuration such that the three receiving antennas AR1,AR2,AR3 each receive a respective signal rx1,rx2,rx3:

-) the first receiving antenna AR1 receives and has at its output a signal rx1 which is the sum of:

--) the first useful signal tx1 transmitted by the respective antenna AT1;

--) a first interfering signal tx2*exp(j$\alpha$) corresponding to the signal tx2 transmitted by the second antenna AT2 and received with relative phase shift equal to $\alpha$ with respect to said useful signal tx1 received;

--) a second interfering signal tx3*exp(j(j$\beta$) corresponding to the signal tx3 transmitted by the third antenna AT3 and received with relative phase shift equal to $\beta$ with respect to said useful signal tx1 received;

-) the second receiving antenna AR2 receives and has at its output a signal rx2 which is the sum of:

--) the second useful signal tx2 transmitted by the respective transmitting antenna AT2;

--) a first interfering signal tx1*exp(j$\alpha$) corresponding to the signal transmitted by the first antenna AT1 and received with relative phase shift equal to $\alpha$ with respect to said useful signal tx2 received;

--) a second interfering signal tx3*exp(j$\alpha$) corresponding to the signal tx3 transmitted by the third antenna AT3 and received with relative phase shift equal $\alpha$ with respect to said useful signal tx2 received by the second receiving antenna AR2;

-) the third receiving antenna AR3 has at its output a signal rx3 which is the sum of:

--) the third useful signal tx3 transmitted by the respective transmitting antenna AT3;

--) a first interfering signal tx2*exp(j$\alpha$) corresponding to the signal tx2 transmitted by the second antenna AT2 and received with relative phase shift equal to $\alpha$ with respect to said useful signal tx3 received by the third transmitting antenna;

--) a second interfering signal tx1*exp(j$\beta$) corresponding to the signal tx1 transmitted by the first transmitting antenna AT1 and received with relative phase shift equal to $\beta$ with respect to said useful signal tx3 received by AR3.

In these conditions the reconstruction method according to the present invention envisages at least the following steps:

- calculating the complex conjugate signal rx2* of the signal rx2 received by the second antenna AR2;
- phase-shifting said complex conjugate signal rx2* by an amount equal to the first phase shift $\alpha$, resulting in a phase-shifted complex conjugate signal rx2*exp(j$\alpha$);
- subtracting the said complex conjugate signal rx2*exp(j$\alpha$) phase-shifted by $\alpha$ from the signal rx1 received by the first receiving antenna AR1 with generation of a reconstructed signal <u>tx3</u> comprising only components tx3 from the third transmitting antenna AT3;
- subtracting the said complex conjugate signal rx2*exp(j$\alpha$) phase-shifted by $\alpha$ from the signal rx3 received by the third antenna with generation of a reconstructed signal <u>tx1</u> comprising only components (tx1) from the first transmitting antenna AT1;

  - estimating D1^ the value of the signal transmitted (D1,tx1) by the first transmitting antenna AT1 on the basis of the reconstructed signal <u>tx1</u> comprising only components (tx1) from the first transmitting antenna AT1;
  - estimating D3^ the value of the signal transmitted (D3,tx3) by the third transmitting antenna (AT3) on the basis of the reconstructed signal (<u>tx3</u>) comprising only components (<u>tx3</u>) from the third transmitting antenna AT3;
  - subtracting (rx2-(D1^exp(j$\alpha$)+D3^exp(j$\alpha$)) from the signal rx2 received by the second receiving antenna AR2 the sum of said estimation signals D1^,D3^, each phase-shifted beforehand by an amount equal to the first phase shift $\alpha$, with reconstruction <u>tx2</u> of the signal (D2,tx2) transmitted by the second transmitting antenna AT2.

As is known, the complex conjugate of a signal is a signal having a same real part but with an imaginary part of opposite sign. Calculation of the complex conjugate is a non-linear operation which may be for example performed by multiplying the original signal by a sinusoid and also by the same sinusoid phase-shifted by n/2, thus producing two components in quadrature of the original signal. Then, the sign of one of the two components obtained, i.e. the component phase-shifted by +n/2 with respect to the first component, is inverted. The two components obtained are then added together, obtaining the complex conjugate signal of the original signal.

A first advantage of the method according to the present invention is that, owing to the non-linear operation of calculation of the complex conjugate of the signal rx2 received by the second antenna AR2, it is possible to reconstruct the signals tx1,tx3 transmitted by performing the linear addition of only two signals (rx1/rx3 and rx2*exp(jα)), therefore limiting the noise superimposed on the reconstructed signals tx1,tx3 to the sum of the noise factors of only two receivers/demodulators (MR1,MR2; MR3,MR2).

Preferably, the method envisages estimating D2^ the value of the signal transmitted (D2,tx2) by the second transmitting antenna AT2 based on said reconstructed signal tx2 by means of subtraction rx2-(D1^exp(jα)+D3^exp(jα)).

Advantageously, in a preferred embodiment, the said estimation D1^,D3^ of the first signal transmitted (D1,tx1) and the third signal transmitted (D3,tx3) is performed by means of a non-linear operation carried out by a respective estimator unit (134;114). In this way, the reconstruction tx2 of the signal tx2 transmitted by the second antenna is also performed following the non-linear estimation D1^,D3^ of the first signal transmitted (D1,tx1) and the third signal transmitted (D3,tx3); if these estimates are correct, the reconstruction of the second signal transmitted tx2 will be affected solely by the noise factor of the receiver/demodulator MR2 associated with the second receiving antenna AR2.

The method according to the invention may be implemented with different combinations of baseband digital techniques and/or analog techniques at the transmission frequency or intermediate frequency, as will become clear from the following description of some preferred examples of the apparatus which implements the method according to the invention.

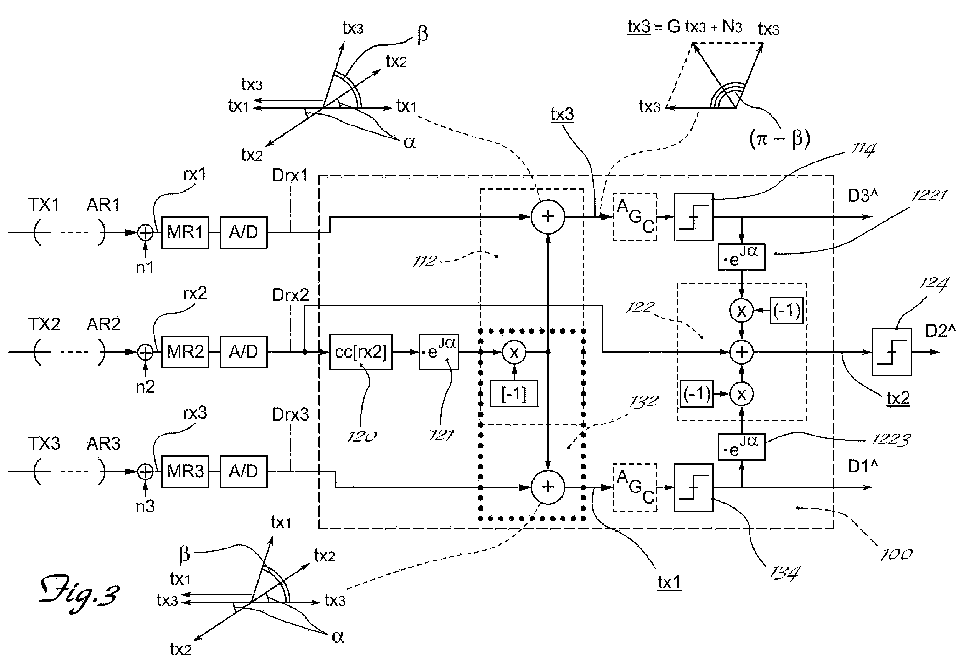

Fig. 3 shows a first example of embodiment of an apparatus 100 for reconstruction of the set of three signals D1,D2,D3 transmitted by means of tx1,tx2,tx3 based on the signals rx1,rx2,rx3 output by the respective three receiving antennas AR1,AR2,AR3 of the radio link. In this first preferred embodiment, the three signals rx1,rx2,rx3 received at high frequency are sent beforehand to respective baseband reception/demodulation units MR1,MR2,MR3 and, once demodulated, sent to respective converters which convert the analog signals into digital signals Drx1,Drx2,Drx3 to be sent to the input of the apparatus 100 according to the invention.

Since the powers of the signals tx1,tx2,tx3 transmitted are the same, the power of the three signals received rx1,rx2,rx3 and of the respective primary and interfering components is also the same; it is, however, preferable that the amplitude of the signals received by the antennas AR1,AR2,AR3 should be equalized by means of respective ACG (Automatic Gain Control) modules (not shown in the Figures) arranged in cascade with the said receiving antennas.

During reception, the second signal rx2 containing a noise component n2 and received by the second receiving antenna AR2 is sent to a stage 120 for converting it into its complex conjugate, said stage providing at its output a signal rx2* which has a power (signal and noise) which is unvaried, but which is the complex conjugate of the input signal rx2; said complex-conjugate signal rx2* is than input to a phase-shifting stage 121 which outputs a signal rx2*·exp(jα) corresponding to the input signal rx2* and phase-shifted with respect to the latter by a phase shift α.

The first signal rx1 supplied by the first receiving antenna AR1, containing a noise component n1, and the phase-shifted complex conjugate signal rx1-(rx2*·exp(jα) are input to a subtraction circuit 112 which determines the difference [rx1-(rx2*·exp(jα))] between the two signals, outputting a reconstructed signal tx3 which contains only two components tx3 of the signal transmitted by the third antenna AT3, which are phase-shifted with respect to each other (by an angle -β) and are such that their vectorial sum corresponds to a signal tx3=Gtx3(+N3) corresponding to the sole signal tx3 transmitted by the third antenna AT3, multiplied by a gain/attenuation factor G dependent on the phase-shift angle β, to which a noise component (N3) derived from only the noise components n1 and n2 of the signals rx1,rx2 received by the first receiving antenna AR1 and second receiving antenna AR2 is added. The reconstruction of the signal tx3 transmitted by the third transmitting antenna AT3 is performed therefore by means of a sum with only two addends and is therefore subject to only the two noise factors n1,n2 principally due, respectively, to the first and second reception/demodulation module MR1;MR2 associated with the first receiving antenna AT1 and the second receiving antenna AT2.

The signal tx3 reconstructed by the subtraction stage 112 is then transferred to a decision unit 114 which performs the non-linear operation of estimating the transmitted value (tx3,D3) of the signal; this operation, if the noise factor N3 is not such as to produce an estimation error, outputs from the decision unit 114 an estimated signal D3^ corresponding to the original baseband source signal D3 transmitted (tx3) by the third transmitting antenna AT3. Preferably the signal tx3 reconstructed by the subtraction stage 112 is transferred first of all to an automatic gain controller AGC which equalizes the amplitude amplified/attenuated by the factor G of the signal to a predetermined value.

A similar operation is carried out on the signal rx3 received by the third receiving antenna AR3:

the signal rx3 received by the third receiving antenna AR3, containing a respective noise component n3 introduced mostly by the reception/demodulation module MR3, and the phase-shifted complex conjugate signal rx2*·exp(jα) supplied by the phase-shifter module 121, are input to a subtraction circuit 132 which determines the difference [rx3-(rx2*·exp(jα)] between the two signals, outputting a reconstructed signal tx1 which contains only two components of the signal tx1 transmitted by the first antenna AT1 with relative phase shift (Π-β) with respect to each other; said components of the first signal tx1 have a vectorial sum which corresponds to a signal tx1=Gtx1(+N1) corresponding to the sole signal tx1 transmitted by the first antenna AT1, multiplied by a gain/attenuation factor G dependent on the phase-shift angle β, to which a noise component N1 derived from only the noise components n3 and n2, and therefore again with only two noise factors, is added.

The signal tx1 reconstructed by the subtraction stage 132 is then transferred to a decision unit 134 which performs the non-linear operation of estimating the transmitted value tx1 of the signal (D1); this operation, if the noise factor N1 is not such as to produce an error in the estimation of the transmitted value, outputs from the decision unit 134 an estimated signal D1^ corresponding to the original baseband source signal D1 transmitted (tx1) in modulation by the first transmitting antenna AT1. Preferably the signal tx1 reconstructed by the subtraction stage 132 is transferred preliminarily to an automatic gain controller AGC which equalizes the amplitude amplified/attenuated by the factor G of the signal to a predetermined value.

Finally, the signal rx2 received by the second antenna AR2 and containing the noise component n2 is input to a subtraction stage 122 which subtracts from said signal rx2 the sum of the two estimated signals D1^,D3^ which are supplied by the decision units 114,134, and therefore without noise components, each of which has been phase-shifted beforehand by the first phase shift α inside a respective phase-shift unit 1221;1223, and the subtraction stage 122 performs therefore the vector operation:

$$rx2\text{-}(D1^{\wedge}\ exp(j\alpha)\text{+}D3^{\wedge}\ exp(j\alpha))\text{=}\underline{tx2}$$

and outputs a reconstructed signal tx2 of the signal tx2,D2 transmitted by the second transmitting antenna AT2. The operation of reconstructing the signal tx2 transmitted by the second antenna AT2 is therefore subject to only the noise component n2 of the second receiving antenna AR2; in fact, if the estimated signals D1^ and D3^ have been correctly reconstructed, components D1^exp(jα);D3^exp(jα) which are noise-free and exactly the same as the interfering components (D1;D3) inherent in rx2 are subtracted from rx2; this operation would otherwise not be possible if the signals rx1,rx3 received by the first and third transmitting antennas AT1;AT3 were used in a linear manner.

The reconstructed signal tx2 is therefore not subject to any gain/attenuation factor G and is thus transferred to an estimator unit 124, similar to the two units 114,134 already described, in order to obtain an estimated signal D2^ corresponding to the original baseband source signal D2.

The three original baseband signals D1,D2,D3 transmitted in modulation tx1,tx2,tx3 on the radio link are therefore available at the output of the apparatus 10.

Since in the sector of numerical processing of signals the circuits and calculations necessary for realizing the functions specified in this apparatus are known, only the basic diagram showing an example of the functional units necessary for performing the separation of the signals received and suppression of the respective interfering components is shown.

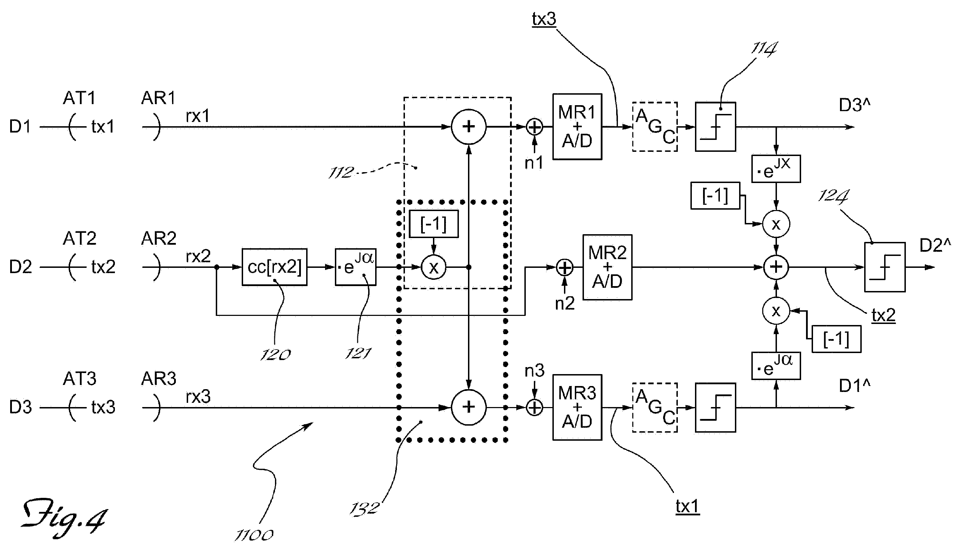

One advantage of the apparatus described in this first embodiment is that the first and third signals tx1,tx3 transmitted are reconstructed tx1,tx3 by determining the linear sum of only two signals (rx1/rx3 and rx2+*exp(j(α)), therefore limiting the noise superimposed on the reconstructed signals tx1,tx3 to the sum of the noise factors of only two receivers/demodulators (MR1,MR2; MR3,MR2). This makes the successive estimation D1^;D3^ of the transmitted value tx1;tx3,D1;D3 using said reconstructed signals tx1,tx3 more reliable. With reference to Fig. 4 this shows a second example of embodiment of a communication system with three pairs of transmitting/receiving antennas for transmission polarization, in which some of the operations of the apparatus which implements the reconstruction method according to the invention are performed at the transmission frequency (generally microwave frequency). In this case, the operations of calculating the complex conjugate and phase shift of the signal rx2 received by the second receiving antenna AT2 and subtracting said phase-shifted complex conjugate signal rx2*[expj(α)] from the signal rx1 received by the first receiving antenna AR1 and from the signal rx3 received by the third receiving antenna AR3 are carried out at the transmission frequency, upstream of the demodulation and digital conversion. Although the functional units 120,121,112,132 of the apparatus 1100 perform the same logic functions as those illustrated in connection with the first embodiment shown in Fig. 3, the same operations are directly performed in analog on the high-frequency signals rx1,rx2,rx3 received by the antennas AR1,AR2,AR3. The techniques of analog implementation of these functional units (for example using passive circuits as retarders and phase-shifters by π/2 of the received signals rx1,rx2,rx3) are likewise well-known in the art.

This embodiment has the further advantage that the reconstructed signals tx1,tx3 of the first signal transmitted (tx1,D1) and the third signal transmitted (tx3,D3) have a respective noise component N1,N3 originating solely from the respective reception/demodulation module MR1;MR3; the estimation D3^;D1^ within the respective estimator units 114;134 will therefore be influenced only by the noise factor of the respective receiver/demodulator module MR1;MR3 and, therefore, intrinsically with an improvement in the signal noise ratio S/N compared to the prior processing. Although the analog circuits necessary for this implementation are more complex and have greater losses than the solution shown in Fig. 3 these drawbacks may be easily compensated using known techniques.

It is also within the competence of the person skilled in the art to apply the same operations to signals which, following the reception by the three receiving antennas AR1,AR2,AR3, are set to an intermediate frequency by means of respective down-conversion modules known in the sector of telecommunications, which solution, however, eliminates the aforementioned advantage of the single noise factor during reconstruction.

It is therefore clear how, with the method and the apparatus according to the invention, it is possible to reconstruct modulated signals transmitted at high frequency on a single, short-range, MIMO radio link with three antennas for transmission polarization in a simple manner and using few conventional circuits.

According to a preferred embodiment it is envisaged that the phase-shifting stages are of the variable type for allowing the static set-up of the apparatus at the moment of activation.

In addition to this, the phase-shifters may be in practice implemented in association with automatic calculation means for adjusting phase-shift angles of the signals received.

Moreover, owing to the fact that the reconstruction of the signal D2, transmitted tx2 by the second antenna AT2, is performed using the first and third reconstructed signals tx1,tx3, following the estimation D1^;D3^ of the value D1;D3 transmitted tx1,tx3 thereof, it is possible to recover effectively the signal tx2 transmitted by the second transmitting antenna AT2 also in the case of configurations of the radio link in which the distance d/2 between said second antenna and the other two antennas AT1,AT3 is such as to determine a first phase shift $\alpha$ less than that bottom limit described in the introduction (at the moment defined at 15° and in any case greater than 5°) and below which the signals transmitted on a MIMO radio link with two antennas for each polarization would be excessively attenuated following reconstruction and therefore not be utilizable on the receiver side. This results in the advantage that, in addition to the completely new implementation of MIMO systems with three transmitting/receiving antennas for each transmission polarization, it is also possible to adapt pre-existing apparatus by:

- inserting a third transmitting antenna and a corresponding receiving antenna arranged in between and equidistant between the transmitting/receiving antennas of a MIMO radio link comprising two transmitting/receiving antennas for polarization, also in the case where the distance (d) between said two pre-existing antennas is already the minimum accepted as possible according to the prior art;
- the addition of a third antenna above or below one of the said pre-existing antennas at a distance the same as the distance between these latter.

A system according to the invention for the transmission and reconstruction of sets of three signals transmitted isofrequential and co-polar in modulation on a short-range MIMO radio link with three transmitting/receiving antennas for polarization comprises essentially:

--) a short-range MIMO radio link comprising three transmitting/receiving antennas for transmission polarization in accordance with what illustrated hitherto with respective modulation/demodulation and conversion modules (D/A,A/D) associated with said antennas;
--) an apparatus 100 for reconstructing the signals transmitted according to the invention, situated on the receiver side of the radio link.

According to a preferred embodiment of the telecommunications system according to the invention it is envisaged that said system also comprises transmission management means able to implement the following operating modes:

--) in normal conditions three independent signals tx1,tx2,tx3 are transmitted, each of which transports its own information data signal D1, D2, D3;
--) in conditions where there is a deterioration in transmission, i.e. a high percentage of transmission error detected during reception on the channels corresponding to the first transmitting antenna AT1 and third transmitting antenna AT3, the management means "switch off" the second transmitting antenna AT2 using the signal received by the second receiving antenna AR2 and now composed of only components of tx1 and tx3 which are phase-shifted by said first phase shift $\alpha$, in order to strengthen the quality of the signals received rx1,rx3 and the reconstruction thereof;
--) in conditions where there is a further deterioration, or as an alternative to the preceding point, the second antenna AT2 may transmit a combination of the signals tx1,tx2 respectively transmitted by the first and third antennas so as to strengthen even further the quality of the signals tx1,tx3 to be received and reconstructed.

Preferably, the transmitting antennas AT1,AT2,AT3 and receiving antennas AR1,AR2,AR3 are arranged so that said second phase shift $\beta$ is greater than 45°, this condition is advantageous in that the gain/attenuation factor G determines a gain in amplitude of the first and third reconstructed signals tx1,tx3 compared to the corresponding transmitted signal tx1,tx3, therefore ensuring a more reliable non-linear estimation D1^,D3^ of the transmitted value.

As shown in Fig. 2 it is envisaged moreover that the telecommunications system according to the invention may provide a further increase in the capacity of the channel by transmitting in parallel with each signal tx1v,tx2v,tx3v transmitted with a given polarization an isofrequential signal tx1h,tx2h,tx3h with orthogonal polarization, the two signals being intrinsically discriminating so that they may be separated during reception using common XPD techniques for eliminating the cross-polar interference.

Although described in connection with a number of embodiments and a number of preferred examples of embodiment of the invention, it is understood that the scope of protection of the present patent is determined solely by the claims below.

## Claims

1. Method for reconstructing during reception three baseband source signals (D1,D2,D3) modulated (tx1,tx2,tx3) at high frequency and transmitted isofrequential and co-polar on a short-range radio link comprising three pairs of transmitting/receiving antennas (AT1-AR1;AT2-AR2;AT3-AR3) for each transmission polarization, wherein:

- each of said three modulated signals (tx1,tx2,tx3) is transmitted by a respective transmitting antenna (AT1,AT2,AT3);
- each of said receiving antennas (AR1,AR2,AR3) is able to receive a respective high-frequency signal (rx1,rx2,rx3) consisting of a primary component, corresponding to the signal transmitted by the respective transmitting antenna, and an interfering component, consisting of a combination of the signals transmitted by the other two transmitting antennas;
- the signal (rx1) received by the first receiving antenna (AR1) is a sum of:

--) the first useful signal (tx1) transmitted by the respective antenna (AT1);
--) a first interfering signal (tx2exp(jα)) corresponding to the signal (tx2) transmitted by the second antenna (AT2) and received with a first relative phase shift α with respect to said useful signal (tx1) received;
--) a second interfering signal (tx3exp(jβ)) corresponding to the signal (tx3) transmitted by the third antenna (AT3) and received with a first relative phase shift β with respect to said useful signal (tx1) received;

- the signal (rx2) received by the second receiving antenna (AR2) is a sum of:

--) the second useful signal (tx2) transmitted by the respective transmitting antenna (AT2);
--) a first interfering signal (tx1*exp(jα)) corresponding to the signal transmitted by the first antenna (AT1) and received with relative phase shift equal to said first phase shift α with respect to said useful signal (tx2) received;
--) a second interfering signal (tx3*exp(jα)) corresponding to the signal (tx3) transmitted by the third antenna (AT3) and received with relative phase shift equal to said first phase shift α with respect to said useful signal (tx2) received by the second receiving antenna (AR2); and

- the signal (rx3) received by the third receiving antenna (AR3) is a sum of:

--) the third useful signal (tx3) transmitted by the respective transmitting antenna (AT3);
--) a first interfering signal (tx2*exp(jα)) corresponding to the signal (tx2) transmitted by the second transmitting antenna (AT2) and received with relative phase shift equal to said first phase shift α with respect to said useful signal (tx3) received by the third receiving antenna;
--) a second interfering signal (tx1*exp(jβ)) corresponding to the signal (tx1) transmitted by the first transmitting antenna (AT1) and received with relative phase shift equal to said second phase shift β with respect to said useful signal (tx3) received by (AR3); **characterized in that** it comprises the following steps:

- calculating the complex conjugate signal (rx2*) of the signal (rx2) received by the second antenna (AR2);
- phase-shifting said complex conjugate signal (rx2*) by an amount equal to the first phase shift α, resulting in a phase-shifted complex conjugate signal (rx2*exp(jα));
- subtracting the said complex conjugate signal (rx2*exp(jα)) phase-shifted by α from the signal (rx1) received by the first receiving antenna (AR1) with generation of a reconstructed signal (tx3) comprising only the components (tx3) from the third transmitting antenna (AT3);
- subtracting the said complex conjugate signal (rx2*exp(jα)) phase-shifted by α from the signal (rx3) received by the third antenna with generation of a reconstructed signal (tx1) comprising only the components (tx1) from the first transmitting antenna (AT1);
- estimating (D1^) the value of the signal transmitted (D1,tx1) by the first transmitting antenna (AT1) on the basis of the reconstructed signal (tx1) comprising only the components (tx1) from the first transmitting antenna (AT1);

- estimating (D3^) the value of the signal transmitted (D3,tx3) by the third transmitting antenna (AT3) on the basis of the reconstructed signal (tx3) comprising only the components (tx3) from the third transmitting antenna (AT3);
- subtracting $(rx2-(D1{^{\wedge}}exp(j\alpha)+D3{^{\wedge}}exp(j\alpha))$ from the signal (rx2) received by the second receiving antenna (AR2) the sum of said estimation signals (D1^,D3^), each phase-shifted beforehand by an amount equal to the first phase shift $\alpha$, with reconstruction (tx2) of the signal (D2,tx2) transmitted by the second transmitting antenna (AT2).

2. Method according to Claim 1, **characterized in that** it envisages an operation (134) for estimating (D2^) the value of the signal (D2,tx2) transmitted by the second transmitting antenna (AT2) downstream of said reconstruction (tx2) of the signal (D2,tx2) transmitted by the second transmitting antenna (AT2).

3. Method according to any one of the preceding claims, **characterized in that** said estimation (D1^,D3^) of the first signal transmitted (D1,tx1) and the third signal transmitted (D3,tx3) is performed by means of a non-linear operation carried out by a respective estimator unit (134;114).

4. Method according to Claim 1, 2 or 3, **characterized in that**, upstream of said estimation (D1^) of the signal (tx1,D1) transmitted by the first transmitting antenna (AT1) and/or said estimation (D3^) of the signal (tx3,D3) transmitted by the third transmitting antenna (AT3), an equalization operation (AGC) at a predetermined value of the amplitude of the reconstructed signal (tx1,tx3) is performed.

5. Method according to any one of the preceding claims, **characterized in that** the high-frequency signals (rx1,rx2,rx3) received by each receiving antenna (AR1,AR2,AR3) are demodulated beforehand (MR1,MR2,MR3) to baseband and converted (A/D) into digital form (Drx1,Drx2,Drx3).

6. Method according to Claim 4, **characterized in that** the signals (rx1,rx2,rx3) received by each receiving antenna (AR1,AR2,AR3) are set beforehand to intermediate frequency.

7. Method according to Claim 5 or 6, **characterized in that** it applies techniques for digital processing of the signals (Drx1,Drx2,Drx3), outputting the three source signals (D1,D2,D3) in baseband.

8. Method according to Claims 1 to 4, **characterized in that** it applies at least one analog processing technique to the high-frequency signals (rx1,rx2,rx3) received by each receiving antenna (AR1,AR2,AR3).

9. Method according to the preceding claim, **characterized in that** at least one of the steps of:

- calculating the complex conjugate signal (rx2*) of the signal (rx2) received by the second antenna (AR2);
- phase-shifting said complex conjugate signal (rx2*);
- subtracting the said complex conjugate signal $(rx2{^{*}}exp(j\alpha))$ phase-shifted by $\alpha$ from the signal (rx1) received by the first receiving antenna (AR1);
- subtracting the said complex conjugate signal $(rx2{^{*}}exp(j\alpha))$ phase-shifted by $\alpha$ from the signal (rx3) received by the third antenna;

is performed at the transmission frequency using analog processing techniques and upstream of units (MR1;MR2;MR3) for receiving/demodulating the signals received;
or that all said steps are performed at the transmission frequency using analog processing techniques and upstream of units (MR1;MR2;MR3) for receiving/demodulating the signals received.

10. Method according to any one of the preceding claims, **characterized in that** the modulation is QAM modulation and/or the amplitude of each signal received (rx1,rx2,rx3) is equalized beforehand.

11. Apparatus (100,1100) for reconstructing during reception three isofrequential and co-polar signals (tx1,tx2,tx3;D1,D2,D3) which are transmitted in high frequency modulation on a short-range radio link comprising three pairs of transmitting/receiving antennas (AT1-AR1;AT2-AR2;AT2-AR3), wherein:

- each transmitting antenna is able to transmit one of said three signals (tx1,tx2,tx3), generated by a respective conventional modulating/transmitting unit (MT1,MT2,MT3), which receives at its input a respective baseband source data signal (D1,D2,D3).
- each of said receiving antennas (AR1,AR2,AR3) is able to receive a respective signal (rx1,rx2,rx3) consisting of a primary component, corresponding to the signal transmitted by the respective transmitting antenna (AT1,AT2,AT3), and an interfering component, consisting of a combination of the signals transmitted by the other two transmitting antennas;
- the signal (rx1) received by the first receiving antenna (AR1) is a sum of:

--) the first useful signal (tx1) transmitted by the respective antenna (AT1);
--) a first interfering signal (tx2exp(j$\alpha$)) corresponding to the signal (tx2) transmitted by the second antenna (AT2) and received with a first relative phase shift $\alpha$ with respect to said useful signal (tx1) received;

--) a second interfering signal (tx3exp(j$\beta$)) corresponding to the signal (tx3) transmitted by the third transmitting antenna (AT3) and received with a second relative phase shift $\beta$ with respect to said useful signal (tx1) received;

- the signal (rx2) received by the second receiving antenna (AR2) is a sum of:

--) the second useful signal (tx2) transmitted by the respective transmitting antenna (AT2);

--) a first interfering signal (tx1*exp(j$\alpha$)) corresponding to the signal transmitted by the first antenna (AT1) and received with relative phase shift equal to said first phase shift $\alpha$ with respect to said useful signal (tx2) received;

--) a second interfering signal (tx3exp(j$\alpha$)) corresponding to the signal (tx3) transmitted by the third antenna (AT3) and received with relative phase shift equal to said first phase shift $\alpha$ with respect to said useful signal (tx2) received by the second receiving antenna (AR2); and

- the signal (rx3) received by the third receiving antenna (AR3) is a sum of:

--) the third useful signal (tx3) transmitted by the respective transmitting antenna (AT3);

--) a first interfering signal (tx2*exp(j$\alpha$)) corresponding to the signal (tx2) transmitted by the second transmitting antenna (AT2) and received with relative phase shift equal to said first phase shift $\alpha$ with respect to said useful signal (tx3) received by the third receiving antenna;

--) a second interfering signal (tx1*exp(j$\beta$)) corresponding to the signal (tx1) transmitted by the first transmitting antenna (AT1) and received with relative phase shift equal to said second phase shift $\beta$ with respect to said useful signal (tx3) received by (AR3); **characterized in that** it comprises:

- a stage (120) for converting a signal (rx2) into the associated complex conjugate signal (rx2*), able to receive at its input the signal (rx2) received by the second antenna (AR2) and output a complex conjugate signal (rx2*) thereof;
- a phase-shifting stage (121) able to receive at its input said complex conjugate signal (rx2*) of the signal (rx2) received by the second antenna (AR2) and generate at its output a corresponding signal (rx2*exp(j$\alpha$)) with the same amplitude, but phase-shifted by said first phase shift $\alpha$;
- a first subtraction circuit (112) able to receive at its input the signal (rx1) received by the first antenna (AR1) and said complex conjugate signal (rx2*exp(j$\alpha$)) phase-shifted by ($\alpha$), subtract the latter from the former and generate at its output a reconstructed signal (tx3) comprising only the components (tx3) from the third transmitting antenna (AT3);
- a second subtraction circuit (132) able to receive at its input the signal (rx3) received by the third antenna (AR3) and said complex conjugate signal (rx2*exp(j$\alpha$)) phase-shifted by $\alpha$, subtract the latter from the former and generate at its output a reconstructed signal (tx1) comprising only the components (tx1) from the first transmitting antenna (AT1);
- a stage (114) for estimating the signal (D3^) transmitted (tx3,D3) by the third transmitting antenna (AT3) on the basis of said reconstructed signal (tx3) emitted by the first subtraction circuit (112);
- a stage (134) for estimating the signal (tx1,D1) transmitted by the first antenna (AT1) on the basis of said reconstructed signal (tx3) emitted by the second subtraction circuit (132);
- a stage (124) for reconstructing the signal (tx2,D2) transmitted by the second transmitting antenna (AT2), able to receive at its input the signal (rx2) received by the second receiving antenna (AR2) and said estimated signals (D1^,D3^) emitted by said stages (114;134) for estimating the first signal transmitted (D1,tx1) and third signal transmitted (D3,tx3), each phase-shifted beforehand by the first phase shift $\alpha$ within a corresponding phase-shifting unit (1221;1223) and able to perform subtraction (rx2-(D1^exp(j$\alpha$)+ D3^exp(j$\alpha$))) between the signal (rx2) received by the second receiving antenna (AR2) and the sum of said estimated signals phase-shifted by $\alpha$ (D1^exp(j$\alpha$);D3^exp(j$\alpha$)), generating at its output a reconstructed signal (tx2) of the signal (tx2,D2) transmitted by the second transmitting antenna (AT2);

12. Apparatus according to Claim 11 **characterized in that** it comprises:

- a stage (144) for estimating (D2^) the signal (D2,tx2) transmitted by the second transmitting antenna (AT2) on the basis of said reconstructed signal tx2 emitted by said stage (124) for reconstructing the signal transmitted by the second antenna (AT2).

**13.** Apparatus according to any one of the preceding claims, **characterized in that** it is situated downstream of units (MR1;MR2;MR3) for baseband demodulation and digital conversion (A/D) of the signals (rx1;rx2;rx3) received by the receiving antennas (AR1;AR2;AR3) and **in that** it operates using techniques for digital processing of the signals.

**14.** Apparatus according to Claim 11 **characterized in that** at least one of the said stages uses techniques for analog processing of the signals at the transmission frequency or at an intermediate frequency between the transmission frequency and baseband.

**15.** Apparatus according to the preceding claim, **characterized in that** at least one - preferably all - of the conversion stage (12), the phase-shifting stage (121), the first subtraction circuit (112) and the second subtraction circuit (132) - preferably all of them - operate at the transmission frequency using analog techniques and/or are situated upstream of units (MR1;MR2;MR3) for reception/demodulation of the signals received.

**16.** Apparatus according to any one of the preceding claims, **characterized in that** it has an automatic amplitude equalizer (AGC) situated upstream of the stage (114;134) for estimating the first signal (D1,tx1) an/or the third signal (D3,tx3) transmitted and/or downstream of each receiving antenna (AR1;AR2;AR3).

**17.** System for transmitting and reconstructing during reception sets of three isofrequential and co-polar signals (D1,tx1; D2,tx2; D3,tx3) transmitted on a short-range MIMO radio link wherein:

- said radio link comprises three pairs of transmitting/receiving antennas (AT1-AR1;AT2-AR2;AT3-AR3) for transmission polarization,
- each transmitting antenna is able to transmit one of said three signals (tx1,tx2,tx3), generated by a respective conventional modulating/transmitting unit (MT1,MT2,MT3), which receives at its input a respective baseband source data signal (D1,D2,D3);
- each of said receiving antennas (AR1,AR2,AR3) is able to receive a respective signal (rx1,rx2,rx3) consisting of a primary component, corresponding to the signal transmitted by the respective transmitting antenna (AT1,AT2,AT3), and an interfering component, consisting of a combination of the signals transmitted by the other two transmitting antennas;
- the three pairs of transmitting and receiving antennas are arranged in such a way that:
- the signal (rx1) received by the first receiving antenna (AR1) is a sum of:

--) the first useful signal (tx1) transmitted by the respective antenna (AT1);
--) a first interfering signal (tx2exp(jα)) corresponding to the signal (tx2) transmitted by the second antenna (AT2) and received with a first relative phase shift $\alpha$ with respect to said useful signal (tx1) received;
--) a second interfering signal (tx3exp(jβ)) corresponding to the signal (tx3) transmitted by the third transmitting antenna (AT3) and received with a second relative phase shift $\beta$ with respect to said useful signal (tx1) received;

- the signal (rx2) received by the second receiving antenna (AR2) is a sum of:

--) the second useful signal (tx2) transmitted by the respective transmitting antenna (AT2);
--) a first interfering signal (tx1*exp(jα)) corresponding to the signal transmitted by the first antenna (AT1) and received with relative phase shift equal to said first phase shift $\alpha$ with respect to said useful signal (tx2) received;
--) a second interfering signal (tx3*exp(jα)) corresponding to the signal (tx3) transmitted by the third antenna (AT3) and received with relative phase shift equal to said first phase shift $\alpha$ with respect to said useful signal (tx2) received by the second receiving antenna (AR2); and

- the signal (rx3) received by the third receiving antenna (AR3) is a sum of:

--) the third useful signal (tx3) transmitted by the respective transmitting antenna (AT3);
--) a first interfering signal (tx2*exp(jα)) corresponding to the signal (tx2) transmitted by the second transmitting antenna (AT2) and received with relative phase shift equal to said first phase shift $\alpha$ with respect to said useful signal (tx3) received by the third receiving antenna;
--) a second interfering signal (tx1*exp(jβ)) corresponding to the signal (tx1) transmitted by the first transmitting antenna (AT1) and received with relative phase shift equal to said second phase shift $\beta$ with respect to said useful signal (tx3) received by (AR3);

**characterized in that** the receiving side of the system comprises:

- an apparatus (100;1100) for reconstructing the signals transmitted (tx1;tx2;tx3) according to any one of Claims 11 to 16.

18. System according to the preceding claim, **characterized in that** it comprises transmission/reception management means able to detect a deterioration in the transmission/reception/ reconstruction quality of said first and third signals (tx1;tx3) transmitted by the first and third transmitting antennas.

19. System according to the preceding claim, **characterized in that** said transmission/reception management means are able to interrupt, upon command, transmission by the second transmitting antenna (AT2) and use the signal received by the second receiving antenna, said signal being composed of only components of (tx1) and (tx3) phase-shifted by said first phase shift $\alpha$, in order to strengthen the quality of the signals received (rx1,rx3) and reconstruction of the signals transmitted (tx1,tx2) by the first transmitting antenna (AT1) and third transmitting antenna (AT3).

20. System according to Claim 18 or 19, **characterized in that** said transmission/reception management means are able to transmit, upon command, via the second antenna (AT2), a combination of the signals (tx1,tx3) transmitted by the first and third transmitting antennas (AT1,AT3).

21. System according to Claim 19 or 20, **characterized in that** said command is sent automatically in the case where a certain percentage of error for reconstruction during reception is exceeded.

22. System according to any one of Claims 17 to 21, **characterized in that** the distance d/2 between the second transmitting antenna (AT2) and the first or the third transmitting antenna (AT1;AT3) and the distance L between each transmitting antenna and the corresponding receiving antenna (AR1;AR2,AR3) are such that the first phase shift $\alpha$ ranges between 5° and 15°.

23. System according to any one of Claims 17 to 21, **characterized in that** the distance d between the first transmitting antenna (AT1) and the third transmitting antenna (AT3) and the distance (L) between each transmitting antenna and the corresponding receiving antenna (AR1,AR2,AR3) are such that the second phase shift $\beta$ is greater than 45°.

## Patentansprüche

1. Verfahren zum Rekonstruieren während Empfang von drei Basisbandquellensignalen (D1, D2, D3), die bei hoher Frequenz moduliert (tx1, tx2, tx3) und isofrequent und kopolar über eine Kurzstrecken-Funkverbindung mit drei Paaren von Sende-/Empfangsantennen (AT1-AR1; AT2-AR2; AT3-AR3) für jede Sendepolarisation gesendet werden, wobei:

- jedes der drei modulierten Signale (tx1, tx2, tx3) von einer jeweiligen Sendeantenne (AT1, AT2, AT3) gesendet wird;
- jede der Empfangsantennen (AR1, AR2, AR3) ein jeweiliges Hochfrequenzsignal (rx1, rx2, rx3) empfangen kann, das aus einer primären Komponente, die dem von der jeweiligen Sendeantenne gesendeten Signal entspricht, und einer Störkomponente, die aus einer Kombination der von den anderen zwei Sendeantennen gesendeten Signale besteht, besteht;
- das von der ersten Empfangsantenne (AR1) empfangene Signal (rx1) die Summe ist von:

  --) dem ersten Nutzsignal (tx1), das von der jeweiligen Antenne (AT1) gesendet wird;
  --) einem ersten Störsignal (tx2exp(j$\alpha$)), das dem Signal (tx2) entspricht, das von der zweiten Antenne (AT2) gesendet und bezüglich des empfangenen Nutzsignals (tx1) mit einer ersten relativen Phasenverschiebung $\alpha$ empfangen wird;
  --) einem zweiten Störsignal (tx3exp(j$\beta$)), das dem Signal (tx3) entspricht, das von der dritten Antenne (AT3) gesendet und bezüglich des empfangenen Nutzsignals (tx1) mit einer ersten relativen Phasenverschiebung $\beta$ empfangen wird;

- das von der zweiten Empfangsantenne (AR2) empfangene Signal (rx2) die Summe ist von:

  --) dem zweiten Nutzsignal (tx2), das von der jeweiligen Sendeantenne (AT2) gesendet wird;
  --) einem ersten Störsignal (tx1 *exp(j$\alpha$)), das dem Signal entspricht, das von der ersten Antenne (AT1) gesendet und bezüglich des empfangenen Nutzsignals (tx2) mit einer relativen Phasenverschiebung gleich der ersten Phasenverschiebung $\alpha$ empfangen wird;
  --) einem zweiten Störsignal (tx3*exp(j$\alpha$)), das dem Signal (tx3) entspricht, das von der dritten Antenne (AT3) gesendet und bezüglich des von der zweiten Empfangsantenne (AR2) empfangenen Nutzsignals (tx2) mit einer relativen Phasenverschiebung gleich der ersten Phasenverschiebung $\alpha$ empfangen wird; und

- das von der dritten Empfangsantenne (AR3) empfangene Signal (rx3) die Summe ist von:

--) dem dritten Nutzsignal (tx3), das von der jeweiligen Sendeantenne (AT3) gesendet wird;

--) einem ersten Störsignal (tx2*exp(jα)), das dem Signal (tx2) entspricht, das von der zweiten Sendeantenne (AT2) gesendet und bezüglich des von der dritten Empfangsantenne empfangenen Nutzsignals (tx3) mit einer relativen Phasenverschiebung gleich der ersten Phasenverschiebung α empfangen wird;

--) einem zweiten Störsignal (tx1*exp(jβ)), das dem Signal (tx1) entspricht, das von der ersten Sendeantenne (AT1) gesendet und bezüglich des von (AR3) empfangenen Nutzsignals (tx3) mit einer relativen Phasenverschiebung gleich der zweiten Phasenverschiebung β empfangen wird;

**dadurch gekennzeichnet, dass** es die folgenden Schritte umfasst:

- Berechnen des komplexen konjugierten Signals (rx2*) des von der zweiten Antenne (AR2) empfangenen Signals (rx2);
- Phasenverschieben des komplexen konjugierten Signals (rx2*) um einen Betrag gleich der ersten Phasenverschiebung α, was ein phasenverschobenes komplexes konjugiertes Signal (rx2*exp(jα)) ergibt;
- Subtrahieren des komplexen konjugierten Signals (rx2*exp(jα)), das um α phasenverschoben ist, von dem von der ersten Empfangsantenne (AR1) empfangenen Signal (rx1) mit Erzeugung eines rekonstruierten Signals (tx3), das nur die Komponenten (tx3) von der dritten Sendeantenne (AT3) umfasst;
- Subtrahieren des komplexen konjugierten Signals (rx2*exp(jα)), das um α phasenverschoben ist, von dem von der dritten Antenne empfangenen Signal (rx3) mit Erzeugung eines rekonstruierten Signals (tx1), das nur die Komponenten (tx1) von der ersten Sendeantenne (AT1) umfasst;
- Schätzen (D1^) des Werts des von der ersten Sendeantenne (AT1) gesendeten Signals (D1, tx1) auf der Basis des rekonstruierten Signals (tx1), das nur die Komponenten (tx1) von der ersten Sendeantenne (AT1) umfasst;
- Schätzen (D3^) des Werts des von der dritten Sendeantenne (AT3) gesendeten Signals (D3, tx3) auf der Basis des rekonstruierten Signals (tx3) , das nur die Komponenten (tx3) von der dritten Sendeantenne (AT3) umfasst;
- Subtrahieren (rx2-(D1^exp(jα)+D3^exp(jα)) von dem Signal (rx2), das von der zweiten Empfangsantenne (AR2) empfangen wird, der Summe der Schätzsignale (D1^, D3^), die jeweils zuvor um einen Betrag gleich der ersten Phasenverschiebung α phasenverschoben wurden, mit Rekonstruktion (tx2) des Signals (D2, tx2), das von der zweiten Sendeantenne (AT2) gesendet wird.

2. Verfahren nach Anspruch 1, **dadurch gekennzeichnet, dass** es eine Operation (134) zum Schätzen (D2^) des Werts des Signals (D2, tx2), das von der zweiten Sendeantenne (AT2) gesendet wird, nachgeschaltet zur Rekonstruktion (tx2) des Signals (D2, tx2), das von der zweiten Sendeantenne (AT2) gesendet wird, vorsieht.

3. Verfahren nach einem der vorhergehenden Ansprüche, **dadurch gekennzeichnet, dass** die Schätzung (D1^, D3^) des gesendeten ersten Signals (D1, tx1) und des gesendeten dritten Signals (D3, tx3) mittels einer nichtlinearen Operation, die von einer jeweiligen Schätzeinheit (134; 114) ausgeführt wird, vorgenommen wird.

4. Verfahren nach Anspruch 1, 2 oder 3, **dadurch gekennzeichnet, dass** vorgeschaltet zu der Schätzung (D1^A) des Signals (tx1, D1), das von der ersten Sendeantenne (AT1) gesendet wird, und/oder zu der Schätzung (D3^) des Signals (tx3, D3), das von der dritten Sendeantenne (AT3) gesendet wird, eine Entzerrungsoperation (AGC) bei einem vorbestimmten Wert der Amplitude des rekonstruierten Signals (tx1, tx3) vorgenommen wird.

5. Verfahren nach einem der vorhergehenden Ansprüche, **dadurch gekennzeichnet, dass** die Hochfrequenzsignale (rx1,rx2,rx3), die von jeder Empfangsantenne (AR1, AR2, AR3) empfangen werden, zuvor zu Basisband demoduliert (MR1, MR2, MR3) und in digitale Form (Drx1, Drx2, Drx3) umgewandelt werden (A/D).

6. Verfahren nach Anspruch 4, **dadurch gekennzeichnet, dass** die Signale (rx1,rx2,rx3), die von jeder Empfangsantenne (AR1,AR2,AR3) empfangen werden, zuvor auf Zwischenfrequenz gesetzt werden.

7. Verfahren nach Anspruch 5 oder 6, **dadurch gekennzeichnet, dass** es Techniken zum digitalen Verarbeiten der Signale (Drx1, Drx2, Drx3) verwendet, wobei die drei Quellensignale (D1, D2, D3) in Basisband ausgegeben werden.

8. Verfahren nach den Ansprüchen 1 bis 4, **dadurch gekennzeichnet, dass** es mindestens eine analoge Verarbeitungstechnik bei den Hochfrequenzsignalen (rx1, rx2, rx3), die von jeder Empfangsantenne (AR1, AR2, AR3) empfangen werden, anwendet.

**9.** Verfahren nach dem vorhergehenden Anspruch, **dadurch gekennzeichnet, dass** mindestens einer der Schritte des:

- Berechnens des komplexen konjugierten Signals (rx2*) des von der zweiten Antenne (AR2) empfangenen Signals (rx2);
- Phasenverschiebens des komplexen konjugierten Signals (rx2*);
- Subtrahierens des komplexen konjugierten Signals (rx2*exp(jα)), das um α phasenverschoben ist, von dem Signal (rx1), das von der ersten Empfangsantenne (AR1) empfangen wird;
- Subtrahierens des komplexen konjugierten Signals (rx2*exp(jα)), das um α phasenverschoben ist, von dem Signal (rx3), das von der dritten Antenne empfangen wird;

bei der Sendefrequenz unter Verwenden von analogen Verarbeitungstechniken und vorgeschaltet zu den Einheiten (MR1; MR2; MR3) zum Empfangen/Demodulieren der empfangenen Signale ausgeführt wird;
oder dass alle Schritte bei der Sendefrequenz unter Verwenden von analogen Verarbeitungstechniken und vorgeschaltet zu den Einheiten (MR1; MR2; MR3) zum Empfangen/Demodulieren der empfangenen Signale ausgeführt werden.

**10.** Verfahren nach einem der vorhergehenden Ansprüche, **dadurch gekennzeichnet, dass** die Modulation QAM-Modulation ist und/oder die Amplitude jedes empfangenen Signals (rx1, rx2, rx3) zuvor entzerrt wird.

**11.** Vorrichtung (100, 1100) zum Rekonstruieren während Empfang von drei isofrequenten und kopolaren Signalen (tx1, tx2, tx3; D1, D2, D3), die in Hochfrequenzmodulation über eine Kurzstrecken-Funkverbindung mit drei Paaren von Sende-/Empfangsantennen (AT1-AR1, AT2-AR2, AT2-AR3) gesendet werden, wobei:

- jede Sendeantenne eines der drei Signale (tx1, tx2, tx3) senden kann, die von einer jeweiligen herkömmlichen Modulations-/Sendeeinheit (MT1, MT2, MT3) erzeugt werden, die an ihrem Eingang ein jeweiliges Basisbandquellendatensignal (D1, D2, D3) empfängt,
- jede der Empfangsantennen (AR1, AR2, AR3) ein jeweiliges Signal (rx1, rx2, rx3) empfangen kann, das aus einer primären Komponente, die dem von der jeweiligen Sendeantenne (AT1, AT2, AT3) gesendeten Signal entspricht, und einer Störkomponente, die aus einer Kombination der von den anderen zwei Sendeantennen gesendeten Signale besteht, besteht;
- das von der ersten Empfangsantenne (AR1) empfangene Signal (rx1) die Summe ist von:

--) dem ersten Nutzsignal (tx1), das von der jeweiligen Antenne (AT1) gesendet wird;
--) einem ersten Störsignal (tx2exp(jα)), das dem Signal (tx2) entspricht, das von der zweiten Antenne (AT2) gesendet und bezüglich des empfangenen Nutzsignals (tx1) mit einer ersten relativen Phasenverschiebung α empfangen wird;
--) einem zweiten Störsignal (tx3exp(jβ)), das dem Signal (tx3) entspricht, das von der dritten Sendeantenne (AT3) gesendet und bezüglich des empfangenen Nutzsignals (tx1) mit einer zweiten relativen Phasenverschiebung β empfangen wird;

- das von der zweiten Empfangsantenne (AR2) empfangene Signal (rx2) die Summe ist von:

--) dem zweiten Nutzsignal (tx2), das von der jeweiligen Sendeantenne (AT2) gesendet wird;
--) einem ersten Störsignal (tx1 *exp(jα)), das dem Signal entspricht, das von der ersten Antenne (AT1) gesendet und bezüglich des empfangenen Nutzsignals (tx2) mit einer relativen Phasenverschiebung gleich der ersten Phasenverschiebung α empfangen wird;
--) einem zweiten Störsignal (tx3*exp(jα)), das dem Signal (tx3) entspricht, das von der dritten Antenne (AT3) gesendet und bezüglich des von der zweiten Empfangsantenne (AR2) empfangenen Nutzsignals (tx2) mit einer relativen Phasenverschiebung gleich der ersten Phasenverschiebung α empfangen wird; und

- das von der dritten Empfangsantenne (AR3) empfangene Signal (rx3) die Summe ist von:

--) dem dritten Nutzsignal (tx3), das von der jeweiligen Sendeantenne (AT3) gesendet wird;
--) einem ersten Störsignal (tx2*exp(α)), das dem Signal (tx2) entspricht, das von der zweiten Sendeantenne (AT2) gesendet und bezüglich des von der dritten Empfangsantenne empfangenen Nutzsignals (tx3) mit einer relativen Phasenverschiebung gleich der ersten Phasenverschiebung α empfangen wird;
--) einem zweiten Störsignal (tx1*exp(jβ)), das dem Signal (tx1) entspricht, das von der ersten Sendeantenne (AT1) gesendet und bezüglich des von (AR3) empfangenen Nutzsignals (tx3) mit einer relativen Phasenverschiebung gleich der zweiten Phasenverschiebung β empfangen wird;

**dadurch gekennzeichnet, dass** sie umfasst:

- eine Stufe (120) zum Umwandeln eines Signals (rx2) in das zugeordnete komplexe konjugierte Signal (rx2*), die an ihrem Eingang das von der zweiten Antenne (AR2) empfangene Signal (rx2) empfangen und ein komplexes konjugiertes Signal (rx2*) desselben ausgeben kann;

- eine Phasenverschiebungsstufe (121), die an ihrem Eingang das komplexe konjugierte Signal (rx2*) des von der zweiten Antenne (AR2) empfangenen Signals (rx2) empfangen und an ihrem Ausgang ein entsprechendes Signal (rx2*exp(jα)) mit der gleichen Amplitude, aber um die erste Phasenverschiebung α phasenverschoben, erzeugen kann;

- eine erste Subtraktionsschaltung (112), die an ihrem Eingang das von der ersten Antenne (AR1) empfangene Signal (rx1) und das um (α) phasenverschobene komplexe konjugierte Signal (rx2*exp(jα)) empfangen, das letztere vom ersteren subtrahieren und an ihrem Ausgang ein rekonstruiertes Signal (tx3), das nur die Komponenten (tx3) von der dritten Sendeantenne (AT3) umfasst, erzeugen kann;

- eine zweite Subtraktionsschaltung (132), die an ihrem Eingang das von der dritten Antenne (AR3) empfangene Signal (rx3) und das um α phasenverschobene komplexe konjugierte Signal (rx2*exp(jα)) empfangen, das letztere vom ersteren subtrahieren und an ihrem Ausgang ein rekonstruiertes Signal (tx1), das nur die Komponenten (tx1) von der ersten Sendeantenne (AT1) umfasst, erzeugen kann;

- eine Stufe (114) zum Schätzen des Signals (D3^), das von der dritten Sendeantenne (AT3) gesendet wird (tx3, D3), auf der Basis des rekonstruierten Signals (tx3), das von der ersten Subtraktionsschaltung (112) emittiert wird;

- eine Stufe (134) zum Schätzen des Signals (tx1, D1), das von der ersten Antenne (AT1) gesendet wird, auf der Basis des rekonstruierten Signals (tx3), das von der zweiten Subtraktionsschaltung (132) emittiert wird;

- eine Stufe (124) zum Rekonstruieren des von der zweiten Sendeantenne (AT2) gesendeten Signals (tx2, D2), die an ihrem Eingang das von der zweiten Empfangsantenne (AR2) empfangene Signal (rx2) und die geschätzten Signale (D1^, D3^), die von den Stufen (114;134) zum Schätzen des gesendeten ersten Signals (D1, tx1) und des gesendeten dritten Signals (D3, tx3) emittiert werden, empfangen kann, wobei jedes vorher in einer entsprechenden Phasenverschiebungseinheit (1221;1223) um die erste Phasenverschiebung α verschoben wird, und die eine Subtraktion (rx2-(D exp(jα) + D3^exp(jα))) zwischen dem von der zweiten Empfangsantenne (AR2) empfangenen Signal (rx2) und der Summe der um α phasenverschobenen geschätzten Signale (D1^exp(jα); D3^exp(jα)) durchführen kann, wobei an ihrem Ausgang ein rekonstruiertes Signal (tx2) des von der zweiten Sendeantenne (AT2) gesendeten Signals (tx2,D2) erzeugt wird.

12. Vorrichtung nach Anspruch 11, **dadurch gekennzeichnet, dass** sie umfasst:

- eine Stufe (144) zum Schätzen (D2^) des von der zweiten Sendeantenne (AT2) gesendeten Signals (D2, tx2) auf der Basis des rekonstruierten Signals tx2, das von der Stufe (124) zum Rekonstruieren des von der zweiten Antenne (AT2) gesendeten Signals emittiert wird.

13. Vorrichtung nach einem der vorhergehenden Ansprüche, **dadurch gekennzeichnet, dass** sie nachgeschaltet zu den Einheiten (MR1; MR2; MR3) für Basisbanddemodulation und digitale Umwandlung (A/D) der von den Empfangsantennen (AR1; AR2; AR3) empfangenen Signale (rx1;rx2;rx3) positioniert ist und dass sie unter Verwenden von Techniken für digitale Verarbeitung der Signale arbeitet.

14. Vorrichtung nach Anspruch 11, **dadurch gekennzeichnet, dass** mindestens eine der Stufen Techniken zum analogen Verarbeiten der Signale bei der Sendefrequenz oder bei einer Zwischenfrequenz zwischen der Sendefrequenz und dem Basisband verwendet.

15. Vorrichtung nach dem vorhergehenden Anspruch, **dadurch gekennzeichnet, dass** mindestens eine - bevorzugt alle - von: Umwandlungsstufe (12), Phasenverschiebungsstufe (121), erster Subtraktionsschaltung (112) und zweiter Subtraktionsschaltung (132) - bevorzugt alle derselben - unter Verwenden analoger Techniken bei der Sendefrequenz arbeiten und/oder vorgeschaltet zu den Einheiten (MR1; MR2; MR3) für Empfang/Demodulation der empfangenen Signale positioniert sind.

16. Vorrichtung nach einem der vorhergehenden Ansprüche, **dadurch gekennzeichnet, dass** sie einen automatischen Amplitudenentzerrer (AGC) aufweist, der vorgeschaltet zu der Stufe (114; 134) zum Schätzen des ersten Signals (D1, tx1) und/oder des gesendeten dritten Signals (D3, tx3) und/oder nachgeschaltet zu jeder Empfangsantenne (AR1; AR2; AR3) positioniert ist.

17. System zum Senden und Rekonstruieren während Empfang von Sätzen von drei isofrequenten und kopolaren Signalen (D1, tx1; D2, tx2; D3, tx3), die über eine Kurzstrecken-MIMO-Funkverbindung gesendet werden, wobei:

- die Funkverbindung drei Paare von Sende-/Empfangsantennen (AT1-AR1; AT2-AR2; AT3-AR3) für Sendepolarisation umfasst,
- jede Sendeantenne eines der drei Signale (tx1, tx2, tx3) senden kann, die von einer jeweiligen herkömmlichen Modulations-/Sendeeinheit (MT1, MT2, MT3) erzeugt werden, die an ihrem Eingang ein jeweiliges Basisbandquellendatensignal (D1, D2, D3) empfängt;
- jede der Empfangsantennen (AR1, AR2, AR3) ein jeweiliges Signal (rx1, rx2, rx3) empfangen kann, das aus einer primären Komponente, die dem von der jeweiligen Sendeantenne (AT1, AT2, AT3) gesendeten Signal entspricht, und einer Störkomponente, die aus einer Kombination der von den anderen zwei Sendeantennen gesendeten Signale besteht, besteht;
- die drei Paare von Sende- und Empfangsantennen so ausgelegt sind, dass
- das von der ersten Empfangsantenne (AR1) empfangene Signal (rx1) die Summe ist von:

--) dem ersten Nutzsignal (tx1), das von der jeweiligen Antenne (AT1) gesendet wird;
--) einem ersten Störsignal (tx2exp(jα)), das dem Signal (tx2) entspricht, das von der zweiten Antenne (AT2) gesendet und bezüglich des empfangenen Nutzsignals (tx1) mit einer ersten relativen Phasenverschiebung α empfangen wird;
--) einem zweiten Störsignal (tx3exp(jβ)), das dem Signal (tx3) entspricht, das von der dritten Sendeantenne (AT3) gesendet und bezüglich des empfangenen Nutzsignals (tx1) mit einer zweiten relativen Phasenverschiebung β empfangen wird;

- das von der zweiten Empfangsantenne (AR2) empfangene Signal (rx2) die Summe ist von:

--) dem zweiten Nutzsignal (tx2), das von der jeweiligen Sendeantenne (AT2) gesendet wird;
--) einem ersten Störsignal (tx1*exp(jα)), das dem Signal entspricht, das von der ersten Antenne (AT1) gesendet und bezüglich des empfangenen Nutzsignals (tx2) mit einer relativen Phasenverschiebung gleich der ersten Phasenverschiebung α empfangen wird;
--) einem zweiten Störsignal (tx3*exp(jα)), das dem Signal (tx3) entspricht, das von der dritten Antenne (AT3) gesendet und bezüglich des von der zweiten Empfangsantenne (AR2) empfangenen Nutzsignals (tx2) mit einer relativen Phasenverschiebung gleich der ersten Phasenverschiebung α empfangen wird; und

- das von der dritten Empfangsantenne (AR3) empfangene Signal (rx3) die Summe ist von:

--) dem dritten Nutzsignal (tx3), das von der jeweiligen Sendeantenne (AT3) gesendet wird;
--) einem ersten Störsignal (tx2*exp(jα)), das dem Signal (tx2) entspricht, das von der zweiten Sendeantenne (AT2) gesendet und bezüglich des von der dritten Empfangsantenne empfangenen Nutzsignals (tx3) mit einer relativen Phasenverschiebung gleich der ersten Phasenverschiebung α empfangen wird;
--) einem zweiten Störsignal (tx1*exp(jβ)), das dem Signal (tx1) entspricht, das von der ersten Sendeantenne (AT1) gesendet und bezüglich des von (AR3) empfangenen Nutzsignals (tx3) mit einer relativen Phasenverschiebung gleich der zweiten Phasenverschiebung β empfangen wird;

**dadurch gekennzeichnet, dass** die Empfangsseite des Systems umfasst:

- eine Vorrichtung (100; 1100) zum Rekonstruieren der gesendeten Signale (tx1; tx2; tx3) nach einem der Ansprüche 11 bis 16.

18. System nach dem vorhergehenden Anspruch, **dadurch gekennzeichnet, dass** es Sende-/Empfangshandhabungsmittel umfasst, die eine Verschlechterung der Sende-/Empfangs-/Rekonstruktionsqualität der ersten und dritten Signale (tx1; tx3), die von der ersten und dritten Sendeantenne gesendet werden, detektieren können.

19. System nach dem vorhergehenden Anspruch, **dadurch gekennzeichnet, dass** die Sende-/Empfangshandhabungsmittel auf Befehl ein Senden durch die zweite Sendeantenne (AT2) unterbrechen und das von der zweiten Empfangsantenne empfangene Signal verwenden können, wobei das Signal nur aus den Komponenten (tx1) und (tx3), die um die erste Phasenverschiebung α phasenverschoben sind, besteht, um die Qualität der empfangenen Signale (rx1, rx3) und die Rekonstruktion der von der ersten Sendeantenne (AT1) und der dritten Sendeantenne (AT3) gesendeten Signale (tx1, tx2) zu verbessern.

20. System nach Anspruch 18 oder 19, **dadurch ge-**

**kennzeichnet, dass** die Sende-/Empfangshandhabungsmittel auf Befehl mittels der zweiten Antenne (AT2) eine Kombination der von der ersten und dritten Sendeantenne (AT1, AT3) gesendeten Signale (tx1, tx3) senden können.

**21.** System nach Anspruch 19 oder 20, **dadurch gekennzeichnet, dass** der Befehl in dem Fall, in dem ein bestimmter Fehlerprozentsatz zum Rekonstruieren während Empfang überschritten wird, automatisch gesendet wird.

**22.** System nach einem der Ansprüche 17 bis 21, **dadurch gekennzeichnet, dass** die Strecke d/2 zwischen der zweiten Sendeantenne (AT2) und der ersten oder der dritten Sendeantenne (AT1; AT3) und die Strecke L zwischen jeder Sendeantenne und der entsprechenden Empfangsantenne (AR1; AR2, AR3) so sind, dass die erste Phasenverschiebung $\alpha$ zwischen 5° und 15° liegt.

**23.** System nach einem der Ansprüche 17 bis 21, **dadurch gekennzeichnet, dass** die Strecke d zwischen der ersten Sendeantenne (AT1) und der dritten Sendeantenne (AT3) und die Strecke (L) zwischen jeder Sendeantenne und der entsprechenden Empfangsantenne (AR1, AR2, AR3) so sind, dass die zweite Phasenverschiebung $\beta$ größer als 45° ist.

## Revendications

**1.** Procédé de reconstruction, pendant une réception, de trois signaux sources de bande de base (D1, D2, D3) modulés (tx1, tx2, tx3) à haute fréquence et émis de manière isofréquentielle et copolaire sur une liaison radio de faible portée comprenant trois paires d'antennes d'émission/réception (AT1-AR1 ; AT2-AR2 ; AT3-AR3) de polarisation d'émission respective, dans lequel :

- chacun desdits trois signaux modulés (tx1, tx2, tx3) est émis par une antenne d'émission respective (AT1, AT2, AT3) ;
- chacune desdites antennes de réception (AR1, AR2, AR3) peut recevoir un signal à haute fréquence respectif (rx1, rx2, rx3) constitué d'une composante primaire, correspondant au signal émis par l'antenne d'émission respective, et d'une composante d'interférence, constituée d'une combinaison des signaux émis par les deux autres antennes d'émission ;
- le signal (rx1) reçu par la première antenne de réception (AR1) est une somme :

--) du premier signal utile (tx1) émis par l'antenne respective (AT1) ;
--) d'un premier signal d'interférence ($tx2\exp(j\alpha)$) correspondant au signal (tx2) émis par la deuxième antenne (AT2) et reçu avec un premier déphasage relatif $\alpha$ par rapport audit signal utile (tx1) reçu ;
--) d'un second signal d'interférence ($tx3\exp(j\beta)$) correspondant au signal (tx3) émis par la troisième antenne (AT3) et reçu avec un premier déphasage relatif $\beta$ par rapport audit signal utile (tx1) reçu ;

- le signal (rx2) reçu par la deuxième antenne d'émission (AR2) est une somme :

--) du deuxième signal utile (tx2) émis par l'antenne d'émission respective (AT2) ;
--) d'un premier signal d'interférence ($tx1^*\exp(j\alpha)$) correspondant au signal émis par la première antenne (AT1) et reçu avec un déphasage relatif égal audit premier déphasage $\alpha$ par rapport audit signal utile (tx2) reçu ;
--) d'un second signal d'interférence ($tx3^*\exp(j\alpha)$) correspondant au signal (tx3) émis par la troisième antenne (AT3) et reçu avec un déphasage relatif égal audit premier déphasage $\alpha$ par rapport audit signal utile (tx2) reçu par la deuxième antenne de réception (AR2) ; et

- le signal (rx3) reçu par la troisième antenne de réception (AR3) est une somme :

--) du troisième signal utile (tx3) émis par l'antenne d'émission respective (AT3) ;
--) d'un premier signal d'interférence ($tx2^*\exp(j\alpha)$) correspondant au signal (tx2) émis par la deuxième antenne d'émission (AT2) et reçu avec un déphasage relatif égal audit premier déphasage $\alpha$ par rapport audit signal utile (tx3) reçu par la troisième antenne de réception ;
--) d'un second signal d'interférence ($tx1^*\exp(j\beta)$) correspondant au signal (tx1) émis par la première antenne d'émission (AT1) et reçu avec un déphasage relatif égal audit second déphasage $\beta$ par rapport audit signal utile (tx3) reçu par l'antenne de réception (AR3) ;

**caractérisé en ce qu'**il comprend les étapes suivantes consistant à :

- calculer le signal complexe conjugué (rx2*) du signal (rx2) reçu par la deuxième antenne (AR2) ;
- déphaser ledit signal complexe conjugué (rx2*) d'une valeur égale au premier déphasage $\alpha$, pour obtenir un signal complexe conjugué dé-

phasé (rx2*exp(jα)) ;
- soustraire ledit signal complexe conjugué (rx2*exp(jα)) déphasé de α du signal (rx1) reçu par la première antenne de réception (AR1) en générant un signal reconstruit (tx3) ne comprenant que les composantes (tx3) de la troisième antenne d'émission (AT3) ;
- soustraire ledit signal complexe conjugué (rx2*exp(jα)) déphasé de α du signal (rx3) reçu par la troisième antenne en générant un signal reconstruit (tx1) ne comprenant que les composantes (tx1) de la première antenne d'émission (AT1) ;
- estimer (D1^) la valeur du signal émis (D1, tx1) par la première antenne émission (AT1) sur la base du signal reconstruit (tx1) ne comprenant que les composantes (tx1) de la première antenne d'émission (AT1) ;
- estimer (D3^) la valeur du signal émis (D3, tx3) par la troisième antenne d'émission (AT3) sur la base du signal reconstruit (tx3) ne comprenant que les composantes (tx3) de la troisième antenne d'émission (AT3) ;
- soustraire, (rx2-(D1^exp (jα) + D3^exp (jα))), la somme desdits signaux d'estimation (D1^, D3^), déphasés chacun au préalable d'une valeur égale au premier déphasage α, du signal (rx2) reçu par la deuxième antenne de réception (AR2), en reconstruisant (tx2) du signal (D2, tx2) émis par la deuxième antenne d'émission (AT2).

2. Procédé selon la revendication 1, **caractérisé en ce qu'**il fait appel à une opération (134) permettant d'estimer la valeur (D2^) du signal (D2, tx2) émis par la deuxième antenne d'émission (AT2) en aval de ladite reconstruction (tx2) du signal (D2, tx2) émis par la deuxième antenne d'émission (AT2).

3. Procédé selon l'une quelconque des revendications précédentes, **caractérisé en ce que** ladite estimation (D1^, D3^) du premier signal émis (D1, tx1) et du troisième signal émis (D3, tx3) est exécutée au moyen d'une opération non linéaire effectuée par une unité d'estimation respective (134 ; 114).

4. Procédé selon la revendication 1, 2 ou 3, **caractérisé en ce qu'**une opération d'égalisation (AGC) est exécutée, à une valeur prédéterminée de l'amplitude du signal reconstruit (tx1, tx3), en amont de ladite estimation (D1^) du signal (tx1, D1) émis par la première antenne émission (AT1) et/ou de ladite estimation (D3^) du signal (tx3, D3) émis par la troisième antenne d'émission (AT3).

5. Procédé selon l'une quelconque des revendications précédentes, **caractérisé en ce que** les signaux à haute fréquence (rx1, rx2, rx3) reçus par chaque antenne de réception (AR1, AR2, AR3) sont démodulés au préalable (MR1, MR2, MR3) à la bande de base et font l'objet d'une conversion d'analogique en numérique (A/D) en une forme numérique (Drx1, Drx2, Drx3).

6. Procédé selon la revendication 4, **caractérisé en ce que** les signaux (rx1, rx2, rx3) reçus par chaque antenne de réception (AR1, AR2, AR3) sont fixés au préalable à une fréquence intermédiaire.

7. Procédé selon la revendication 5 ou 6, **caractérisé en ce qu'**il applique des techniques permettant un traitement numérique des signaux (Drx1, Drx2, Drx3), en délivrant en sortie les trois signaux sources (D1, D2, D3) dans la bande de base.

8. Procédé selon les revendications 1 à 4, **caractérisé en ce qu'**il applique au moins une technique de traitement analogique aux signaux à haute fréquence (rx1, rx2, rx3) reçus par chaque antenne de réception (AR1, AR2, AR3).

9. Procédé selon la revendication précédente, **caractérisé en ce qu'**il fait appel à au moins l'une des étapes consistant à :

   - calculer le signal complexe conjugué (rx2*) du signal (rx2) reçu par la deuxième antenne (AR2) ;
   - déphaser ledit signal complexe conjugué (rx2*) ;
   - soustraire ledit signal complexe conjugué (rx2*exp(jα)) déphasé de α du signal (rx1) reçu par la première antenne de réception (AR1) ;
   - soustraire ledit signal complexe conjugué (rx2*exp(jα)) déphasé de α du signal (rx3) reçu par la troisième antenne ;

   exécutée à la fréquence d'émission au moyen de techniques de traitement analogique et en amont d'unités (MR1 ; MR2 ; MR3) destinées à recevoir/démoduler les signaux reçus ;
   ou **en ce que** toutes lesdites étapes sont exécutées à la fréquence d'émission au moyen de techniques de traitement analogique et en amont d'unités (MR1 ; MR2 ; MR3) destinées à recevoir/démoduler les signaux reçus.

10. Procédé selon l'une quelconque des revendications précédentes, **caractérisé en ce que** la modulation est une modulation QAM (modulation d'amplitude de quadrature) et/ou en ce que l'amplitude de chaque signal reçu (rx1, rx2, rx3) est égalisée au préalable.

11. Appareil (100, 1100) de reconstruction, pendant une réception, de trois signaux isofréquentiels et copolaires (tx1, tx2, tx3 ; D1, D2, D3) qui sont émis en modulation haute fréquence sur une liaison radio de faible portée comprenant trois paires d'antennes d'émission/réception (AT1-AR1 ; AT2-AR2 ; AT3-AR3), dans lequel :

- chaque antenne d'émission peut émettre l'un desdits trois signaux (tx1, tx2, tx3), généré par une unité de modulation/d'émission classique respective (MT1, MT2, MT3), qui reçoit au niveau de son entrée un signal de données source de bande de base respectif (D1, D2, D3) ;
- chacune desdites antennes de réception (AR1, AR2, AR3) peut recevoir un signal respectif (rx1, rx2, rx3) constitué d'une composante primaire, correspondant au signal émis par l'antenne d'émission respective (AT1, AT2, AT3), et une composante d'interférence, constituée d'une combinaison des signaux émis par les deux autres antennes d'émission ;
- le signal (rx1) reçu par la première antenne de réception (AR1) est une somme :

--) du premier signal utile (tx1) émis par l'antenne respective (AT1) ;
--) d'un premier signal d'interférence $(tx2 \exp(j\alpha))$ correspondant au signal (tx2) émis par la deuxième antenne (AT2) et reçu avec un premier déphasage relatif $\alpha$ par rapport audit signal utile (tx1) reçu ;
--) d'un second signal d'interférence $(tx3 \exp(j\beta))$ correspondant au signal (tx3) émis par la troisième antenne d'émission (AT3) et reçu avec un second déphasage relatif $\beta$ par rapport audit signal utile (tx1) reçu ;

- le signal (rx2) reçu par la deuxième antenne de réception (AR2) est une somme :

--) du deuxième signal utile (tx2) émis par l'antenne d'émission respective (AT2) ;
--) d'un premier signal d'interférence $(tx1{*}\exp(j\alpha))$ correspondant au signal émis par la première antenne (AT1) et reçu avec un déphasage relatif égal audit premier déphasage $\alpha$ par rapport audit signal utile (tx2) reçu ;
--) d'un second signal d'interférence $(tx3{*}\exp(j\alpha))$ correspondant au signal (tx3) émis par la troisième antenne (AT3) et reçu avec un déphasage relatif égal audit premier déphasage $\alpha$ par rapport audit signal utile (tx2) reçu par la deuxième antenne de réception (AR2) ; et

- le signal (rx3) reçu par la troisième antenne de réception (AR3) est une somme :

--) du troisième signal utile (tx3) émis par l'antenne d'émission respective (AT3) ;
--) d'un premier signal d'interférence $(tx2{*}\exp(j\alpha))$ correspondant au signal (tx2) émis par la deuxième antenne d'émission (AT2) et reçu avec un déphasage relatif égal audit premier déphasage $\alpha$ par rapport audit signal utile (tx3) reçu par la troisième antenne de réception ;
--) d'un second signal d'interférence $(tx1{*}\exp(j\beta))$ correspondant au signal (tx1) émis par la première antenne d'émission (AT1) et reçu avec un déphasage relatif égal audit second déphasage $\beta$ par rapport audit signal utile (tx3) reçu par l'antenne de réception (AR3) ;

**caractérisé en ce qu'**il comprend :

- un étage (120) de conversion d'un signal (rx2) en signal complexe conjugué associé (rx2*), pouvant recevoir, au niveau de son entrée, le signal (rx2) reçu par la deuxième antenne (AR2) et délivrer en sortie son signal complexe conjugué (rx2*) ;
- un étage de déphasage (121) pouvant recevoir, au niveau de son entrée, ledit signal complexe conjugué (rx2*) du signal (rx2) reçu par la deuxième antenne (AR2) et générer, au niveau de sa sortie, un signal correspondant $(rx2{*}\exp(j\alpha))$ ayant la même amplitude, mais déphasé dudit premier déphasage $\alpha$ ;
- un premier circuit de soustraction (112) pouvant recevoir, au niveau de son entrée, le signal (rx1) reçu par la première antenne (AR1) et ledit signal complexe conjugué $(rx2{*}\exp(j\alpha))$ déphasé de $(\alpha)$, soustraire ce dernier du premier et générer, au niveau de sa sortie, un signal reconstruit (tx3) ne comprenant que les composantes (tx3) de la troisième antenne d'émission (AT3) ;
- un second circuit de soustraction (132) pouvant recevoir, au niveau de son entrée, le signal (rx3) reçu par la troisième antenne (AR3) et ledit signal complexe conjugué $(rx2{*}\exp(j\alpha))$ déphasé de $\alpha$, soustraire ce dernier du premier et générer, au niveau de sa sortie, un signal reconstruit (tx1) ne comprenant que les composantes (tx1) de la première antenne d'émission (AT1) ;
- un étage (114) d'estimation (D3^) du signal émis (tx3, D3) par la troisième antenne d'émission (AT3) sur la base dudit signal reconstruit (tx3) généré par le premier circuit de soustraction (112) ;
- un étage (134) d'estimation du signal (tx1, D1) émis par la première antenne (AT1) sur la base dudit signal reconstruit (tx3) généré par le second circuit de soustraction (132) ;

- un étage (124) de reconstruction du signal (tx2, D2) émis par la deuxième antenne d'émission (AT2), pouvant recevoir, au niveau de son entrée, le signal (rx2) reçu par la deuxième antenne de réception (AR2) et lesdits signaux estimés (D1^, D3^) émis par lesdits étages (114 ; 134) d'estimation du premier signal émis (D1, tx1) et du troisième signal émis (D3, tx3), tous les deux étant déphasés au préalable du premier déphasage $\alpha$ à l'intérieur d'une unité de déphasage correspondante (1221 ; 1223) et pouvant effectuer une soustraction (rx2-(D1^exp(j$\alpha$) + D3^exp(j$\alpha$))) entre le signal (rx2) reçu par la deuxième antenne de réception (AR2) et la somme desdits signaux estimés déphasés de $\alpha$ (D1^exp(j$\alpha$) ; D3^exp(j$\alpha$)), en générant, au niveau de sa sortie, un signal reconstruit (tx2) du signal (tx2, D2) émis par la deuxième antenne d'émission (AT2).

**12.** Appareil selon la revendication 11, **caractérisé en ce qu'**il comprend :

- un étage (144) d'estimation (D2^) du signal (D2, tx2) émis par la deuxième antenne d'émission (AT2) sur la base dudit signal reconstruit (tx2) émis par ledit étage (124) de reconstruction du signal émis par la deuxième antenne (AT2).

**13.** Appareil selon l'une quelconque des revendications précédentes, **caractérisé en ce qu'**il est situé en aval d'unités (MR1 ; MR2 ; MR3) de démodulation de bande de base et de conversion numérique (A/D) des signaux (rx1 ; rx2 ; rx3) reçus par les antennes de réception (AR1 ; AR2 ; AR3) et **en ce qu'**il opère au moyen de techniques permettant un traitement numérique des signaux.

**14.** Appareil selon la revendication 11, **caractérisé en ce qu'**au moins l'un desdits étages fait appel à des techniques permettant un traitement analogique des signaux à la fréquence d'émission ou à une fréquence intermédiaire entre la fréquence d'émission et la bande de base.

**15.** Appareil selon la revendication précédente, **caractérisé en ce qu'**au moins l'un de l'étage de conversion (12), de l'étage de déphasage (121), du premier circuit de soustraction (112) et du second circuit de soustraction (132) et, de préférence l'ensemble de ces derniers, opère à la fréquence d'émission en faisant appel à des techniques analogiques et/ou sont situées en amont d'unités (MR1 ; MR2 ; MR3) destinées à recevoir/démoduler les signaux reçus.

**16.** Appareil selon l'une quelconque des revendications précédentes, **caractérisé en ce qu'**il comporte un égaliseur d'amplitude automatique (AGC) situé en amont de l'étage (114 ; 134) d'estimation du premier signal (D1, tx1) et/ou du troisième signal (D3, tx3) émis et/ou en aval de chaque antenne de réception (AR1 ; AR2 ; AR3).

**17.** Système d'émission et de reconstruction, pendant une réception, d'ensembles de trois signaux isofréquentiels et copolaires (D1, tx1 ; D2, tx2 ; D3, tx3) émis sur une liaison radio à MIMO (entrées multiples - sorties multiples) de faible portée, dans lequel :

- ladite liaison radio comprend trois paires d'antennes d'émission/réception (AT1-AR1 ; AT2-AR2 ; AT3-AR3) de polarisation d'émission ;
- chaque antenne d'émission peut émettre l'un desdits trois signaux (tx1, tx2, tx3), généré par une unité de modulation/émission classique respective (MT1, MT2, MT3) qui reçoit, au niveau de son entrée, un signal de données source de bande de base respectif (D1, D2, D3) ;
- chacune desdites antennes de réception (AR1, AR2, AR3) peut recevoir un signal respectif (rx1, rx2, rx3) constitué d'une composante primaire, correspondant au signal émis par l'antenne d'émission respective (AT1, AT2, AT3), et d'une composante d'interférence, constituée d'une combinaison des signaux émis par les deux autres antennes d'émission ;
- les trois paires d'antennes d'émission et de réception sont disposées de sorte que :
- le signal (xr1) reçu par la première antenne de réception (AR1) est une somme :

--) du premier signal utile (tx1) émis par l'antenne respective (AT1) ;
--) d'un premier signal d'interférence (tx2exp(j$\alpha$)) correspondant au signal (tx2) émis par la deuxième antenne (AT2) et reçu avec un premier déphasage relatif $\alpha$ par rapport audit signal utile (tx1) reçu ;
--) d'un second signal d'interférence (tx3exp(j$\beta$)) correspondant au signal (tx3) émis par la troisième antenne d'émission (AT3) et reçu avec un second déphasage relatif $\beta$ par rapport audit signal utile (tx1) reçu ;

- le signal (rx2) reçu par la deuxième antenne de réception (AR2) est une somme :

--) du deuxième signal utile (tx2) émis par l'antenne d'émission respective (AT2) ;
--) d'un premier signal d'interférence (tx1*exp(j$\alpha$)) correspondant au signal émis par la première antenne (AT1) et reçu avec un déphasage relatif égal audit premier déphasage $\alpha$ par rapport audit signal utile (tx2) reçu ;

--) d'un second signal d'interférence (tx3*exp(jα)) correspondant au signal (tx3) émis par la troisième antenne (AT3) et reçu avec un déphasage relatif égal audit premier déphasage α par rapport audit signal utile (tx2) reçu par la deuxième antenne de réception (AR2) ; et

- le signal (rx3) reçu par la troisième antenne de réception (AR3) est une somme :

--) du troisième signal utile (tx3) émis par l'antenne d'émission respective (AT3) ;
--) d'un premier signal d'interférence (tx2*exp(jα)) correspondant au signal (tx2) émis par la deuxième antenne d'émission (AT2) et reçu avec un déphasage relatif égal audit premier déphasage α par rapport audit signal utile (tx3) reçu par la troisième antenne de réception ;
--) d'un second signal d'interférence (tx1*exp(jβ)) correspondant au signal (tx1) émis par la première antenne d'émission (AT1) et reçu avec un déphasage relatif égal audit second déphasage β par rapport audit signal utile (tx3) reçu par l'antenne de réception (AR3) ;

**caractérisé en ce que** le côté réception du système comprend :

- un appareil (100 ; 1100) destiné à reconstruire les signaux émis (tx1 ; tx2 ; tx3) selon l'une quelconque des revendications 11 à 16.

18. Système selon la revendication précédente, **caractérisé en ce qu'**il comprend des moyens de gestion d'émission/réception pouvant détecter une détérioration de la qualité d'émission/réception/reconstruction desdits premier et troisième signaux (tx1 ; tx3) émis par les première et troisième antennes d'émission.

19. Système selon la revendication précédente, **caractérisé en ce que** lesdits moyens de gestion d'émission/réception peuvent interrompre, au moyen d'une instruction, une émission par la deuxième antenne d'émission (AT2) et utiliser le signal reçu par la deuxième antenne de réception, ledit signal n'étant composé que de composantes de (tx1) et de (tx3) déphasées dudit premier déphasage α, afin de renforcer la qualité des signaux reçus (rx1, rx3) et la reconstruction des signaux émis (tx1, tx2) par la première antenne d'émission (AT1) et la troisième antenne d'émission (AT3).

20. Système selon la revendication 18 ou 19, **caractérisé en ce que** lesdits moyens de gestion d'émission/réception peuvent émettre, au moyen d'une instruction, par le biais de la deuxième antenne (AT2), une combinaison des signaux (tx1, tx3) émis par les première et troisième antennes d'émission (AT1, AT3).

21. Système selon la revendication 19 ou 20, **caractérisé en ce que** ladite instruction est envoyée automatiquement dans le cadre d'un dépassement d'un certain pourcentage d'erreur de reconstruction pendant la réception.

22. Système selon l'une quelconque des revendications 17 à 21, **caractérisé en ce que** la distance d/2 entre la deuxième antenne d'émission (AT2) et la première ou la troisième antenne d'émission (AT1 ; AT3) et la distance L entre chaque antenne d'émission et l'antenne de réception correspondante (AR1 ; AR2, AR3) sont telles que le déphasage α est compris entre 5° et 15°.

23. Système selon l'une quelconque des revendications 17 à 21, **caractérisé en ce que** la distance d entre la première antenne d'émission (AT1) et la troisième antenne d'émission (AT3) et la distance (L) entre chaque antenne d'émission et l'antenne de réception correspondante (AR1, AR2, AR3) sont telles que le second déphasage β est supérieur à 45°.

Fig.1

Fig.2

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009296486 A1
- WO 0215456 A2

- EP 2282419 A